# EUROPEAN PATENT APPLICATION

(11) **EP 4 823 200 A1**
(43) Date of publication of application: **14.10.2026**
(21) Application number: 23960467.1
(22) Date of filing: 05.12.2023
(51) Int. Cl.: H04W 72/0446

(54) **SIGNAL SENDING METHOD AND APPARATUS, SIGNAL RECEIVING METHOD AND APPARATUS, DEVICE, AND MEDIUM**

(71) Applicant: GUANGDONG OPPO MOBILE TELECOMMUNICATIONS CORP., LTD., Dongguan, Guangdong 523860 (CN)
(72) Inventor: LIANG, Bin, Dongguan, Guangdong 523860 (CN); XU, Jing, Dongguan, Guangdong 523860 (CN); LIN, Yanan, Dongguan, Guangdong 523860 (CN)
(74) Representative: Taor, Simon Edward William
(86) International application number: PCT/CN2023/136545
(87) International publication number: WO 2025/118153

(57) **Abstract**

The present application relates to the field of communications, and provides a signal sending method and apparatus, a signal receiving method and apparatus, a device, and a medium. The signal sending method is applied to a signal sender device, and comprises: sending at least two signals, wherein the at least two signals occupy at least two time-frequency resources among a group of time-frequency resources, the time-domain positions corresponding to the at least two time-frequency resources are different, and the at least two signals are generated on the basis of a same signal sequence. The method can ensure the autocorrelation characteristics of at least two signals sent at different time-domain positions, thereby improving the perception performance.

## Description

### TECHNICAL FIELD

The disclosure relates to the field of communications, and more particularly to, a signal sending method and apparatus, a signal receiving method and apparatus, a device and a medium.

### BACKGROUND

The Integrated Sensing and Communication (ISAC) is a very promising technology. During sensing, especially sensing of a Doppler offset and velocity, it is necessary to measure signals over a period of time. The better the autocorrelation properties of the signals over the period of time, the better the sensing performance.

How to guarantee autocorrelation properties of signals transmitted at different times so as to guarantee the sensing performance is an urgent problem to be solved.

### SUMMARY

The disclosure provides a signal sending method and apparatus, a signal receiving method and apparatus, a device and a medium. The technical schemes are as follows.

According to an aspect of the disclosure, there is provided a signal sending method, applied to a signal sending end device, the method including an operation as follows.

At least two signals are sent, the at least two signals occupying at least two time-frequency resources in a set of time-frequency resources, and the at least two time-frequency resources corresponding to different time-domain positions. The at least two signals are generated based on a same signal sequence.

According to an aspect of the disclosure, there is provided a signal receiving method, applied to a signal receiving end device, the method including an operation as follows.

At least two signals are received, the at least two signals occupying at least two time-frequency resources in a set of time-frequency resources, and the at least two time-frequency resources corresponding to different time-domain positions. The at least two signals are generated based on a same signal sequence.

According to another aspect of the embodiments of the disclosure, there is provided a signal sending apparatus, including a sending module.

The sending module is configured to send at least two signals, the at least two signals occupying at least two time-frequency resources in a set of time-frequency resources, and the at least two time-frequency resources corresponding to different time-domain positions. The at least two signals are generated based on a same signal sequence.

According to another aspect of the embodiments of the disclosure, there is provided a signal receiving apparatus, including a receiving module.

The receiving module is configured to receive at least two signals, the at least two signals occupying at least two time-frequency resources in a set of time-frequency resources, and the at least two time-frequency resources corresponding to different time-domain positions. The at least two signals are generated based on a same signal sequence.

According to another aspect of the disclosure, there is provided a terminal device including a processor, a transceiver and a memory.

The transceiver is coupled to the processor; and the memory is for storing instructions executable by the processor.

The terminal device is configured to perform the signal sending method or the signal receiving method as described above.

According to another aspect of the disclosure, there is provided a network device including a processor, a transceiver and a memory.

The transceiver is coupled to the processor; and the memory is for storing instructions executable by the processor.

The network device is configured to perform the signal sending method or the signal receiving method as described above.

According to another aspect of the disclosure, there is provided a computer-readable storage medium having stored thereon executable instructions loaded and executed by a processor to perform the the signal sending method or the signal receiving method as described above.

According to another aspect of the disclosure, there is provided a chip, including a programmable logic circuit or a program, the chip being configured to perform the the signal sending method or the signal receiving method as described above.

According to another aspect of the disclosure, there is provided a computer program product, including computer instructions stored in a computer-readable storage medium from which a processor of a computer device reads the computer instructions, where the processor executes the computer instructions to cause the computer device to perform the the signal sending method or the signal receiving method as described above.

According to another aspect of the disclosure, there is provided a computer program, including computer instructions executed by a processor of a computer device to cause the computer device to perform the the signal sending method or the signal receiving method as described above.

The technical solutions provided by the embodiments of the disclosure include at least the following beneficial effects.

The signal sending end device sends at least two signals, and the signal receiving end device receives the at least two signals. Herein, the at least two signals occupy at least two time-frequency resources in a set of time-frequency resources, the at least two time-frequency resources correspond to different time-domain positions, and the at least two signals are generated based on a same signal sequence. Since signals corresponding to a same signal sequence have autocorrelation properties, the autocorrelation properties of at least two signals sent by the signal sending end device at different time-domain positions can be guaranteed, and the signal receiving end device can distinguish the at least two signals sent at different time-domain positions, so that the sensing performance can be improved, which is beneficial to sensing measurement and sensing target detection.

### BRIEF DESCRIPTION OF THE DRAWINGS

In order to more clearly explain the technical solutions in the embodiments of the disclosure, the accompanying drawings that need to be used in the description of the embodiments will be briefly introduced below, and it is apparent that the accompanying drawings in the following description only illustrate some embodiments of the disclosure, and for those skilled in the art, other accompanying drawings can be obtained from these accompanying drawings without creative efforts.
FIG. 1 illustrates a schematic diagram of mapping patterns of a reference signal provided by an exemplary embodiment of the disclosure.
FIG. 2 illustrates a schematic diagram of a wireless communication system provided by an exemplary embodiment of the disclosure.
FIG. 3 illustrates a schematic flowchart of a signal sending method provided by an exemplary embodiment of the disclosure.
FIG. 4 illustrates a schematic flowchart of a signal receiving method provided by an exemplary embodiment of the disclosure.
FIG. 5 illustrates a schematic diagram of a set of time-frequency resources provided by an exemplary embodiment of the disclosure.
FIG. 6 illustrates a schematic diagram of a transmission opportunity provided by an exemplary embodiment of the disclosure.
FIG. 7 illustrates a schematic diagram of transmission opportunities provided by some embodiments of the disclosure.
FIG. 8 illustrates a schematic diagram of transmission opportunities provided by some embodiments of the disclosure.
FIG. 9 illustrates a schematic diagram of a transmission opportunity provided by an exemplary embodiment of the disclosure.
FIG. 10 illustrates a schematic diagram of time-domain signal mapping provided by an exemplary embodiment of the disclosure.
FIG. 11 illustrates a schematic diagram of time-domain signal mapping provided by an exemplary embodiment of the disclosure.
FIG. 12 illustrates a schematic diagram of consecutive signal mapping within one slot provided by an exemplary embodiment of the disclosure.
FIG. 13 illustrates a schematic diagram of consecutive signal mapping within multiple slots provided by an exemplary embodiment of the disclosure.
FIG. 14 illustrates a schematic diagram of spaced signal mapping within one slot provided by an exemplary embodiment of the disclosure.
FIG. 15 illustrates a schematic diagram of spaced signal mapping within multiple slots provided by an exemplary embodiment of the disclosure.
FIG. 16 illustrates a schematic diagram of a time window provided by an exemplary embodiment of the disclosure.
FIG. 17 illustrates a schematic diagram of time windows provided by an exemplary embodiment of the disclosure.
FIG. 18 illustrates a schematic diagram of time windows provided by an exemplary embodiment of the disclosure.
FIG. 19 illustrates a schematic diagram of a time window provided by an exemplary embodiment of the disclosure.
FIG. 20 illustrates a schematic diagram of time-domain signal mapping provided by an exemplary embodiment of the disclosure.
FIG. 21 illustrates a schematic diagram of time-domain signal mapping provided by an exemplary embodiment of the disclosure.
FIG. 22 illustrates a schematic diagram of different sets of time-frequency resources provided by an exemplary embodiment of the disclosure.
FIG. 23 illustrates a schematic diagram of different sets of time-frequency resources provided by an exemplary embodiment of the disclosure.
FIG. 24 illustrates a block diagram of a signal sending apparatus provided by an exemplary embodiment of the disclosure.
FIG. 25 illustrates a block diagram of a signal receiving apparatus provided by an exemplary embodiment of the disclosure.
FIG. 26 illustrates a structural block diagram of a communication device provided by an exemplary embodiment of the disclosure.

### DETAILED DESCRIPTION

In order to make the object, technical solution and advantages of the disclosure more clear, embodiments of the disclosure will be described in further detail below with reference to the accompanying drawings. Exemplary embodiments, examples of which are shown in the accompanying drawings, will be described in detail herein. In the following description made with reference to the drawings, the same numerals in different drawings denote the same or similar elements unless otherwise indicated. The implementations described in the following exemplary embodiments do not represent all implementations consistent with the disclosure. Rather, they are merely examples of devices and methods consistent with some aspects of the disclosure as detailed in the appended claims.

The terminology used in the disclosure is for the purpose of describing particular embodiments only and is not intended to limit the disclosure. As used in the disclosure and the appended claims, the singular forms "a" and "the" are also intended to include the plurality of forms unless the context clearly indicates otherwise. It should also be understood that the term "and/or" as used herein refers to including any or all possible combinations of one or more associated listed items.

It should be understood that although the terms first, second, third, etc. may be employed in the disclosure to describe various pieces of information, such information should not be limited to these terms. These terms are only used to distinguish the same type of information from each other. For example, the first information may also be referred to as the second information, and similarly, the second information may also be referred to as the first information without departing from the scope of the disclosure. Depending on the context, the word "if" as used herein may be interpreted as "at ..." or "when" or "in response to determining".

First, the communication technologies relating to the embodiments of the disclosure will be introduced.

### 1. Integrated Sensing and Communication (ISAC) technology

The ISAC technology can be roughly divided into the following two categories: communication-assisted sensing and sensing-assisted communication. The communication-assisted sensing refers to transfer and aggregation of sensing information through wireless communications, which can expand the breadth and depth of sensing services and improve the timeliness of the sensing services. Based on the communication and sensing fusion technology, it can provide efficient sensing services such as high-precision positioning, high-resolution imaging and virtual environment reconstruction, and can effectively build a digital twin environment to implement digital re-presentation and deep processing in thousands of industries.

A next Generation mobile communication system, such as 6th Generation (6G) mobile communication system, will be the fusion of a mobile communication network, a sensing network and a computing power network. In the narrow sense, the sensing network refers to a system with capabilities of target positioning (ranging, velocity measurement, angle measurement), target imaging, target detection, target tracking and target recognition, and in the broad sense, it refers to the system with all the attributes and states of services, networks, users and terminals, as well as environmental objects. Exemplarily, from the perspective of sensing applications, sensing may include at least, but not limited to, the following categories: outdoor/wide area/local area applications, including smart cities (e.g., weather monitoring, etc.), smart transportation/high-speed rail (e.g., high-precision map construction, road supervision, intrusion detection, etc.), low-altitude applications (e.g., drone monitoring and obstacle avoidance, flight intrusion detection, flight path management, etc.), and the like; and indoor/local applications, including smart home and health management (e.g. respiratory monitoring, intrusion detection, gesture/pose recognition, motion monitoring, movement trajectory tracking, etc.), smart factories (e.g. intrusion detection, material detection, item defect detection, etc.), and the like.

Wireless communication and sensing are two important applications of the modern radio frequency technology. The sensing uses radio waves to detect the parameters of physical environment to implement environmental sensing such as target positioning, action recognition and imaging. Traditional sensing and wireless communication exist independently, and the separate design wastes wireless spectra and hardware resources. In the era of Beyond 5G (B5G) and 6G, the communication spectra have moved towards millimeter wave, terahertz and visible light communication. In the future, the spectra of wireless communication will coincide with the traditional sensing spectra. The ISAC technology combines the functions of wireless communication and sensing, and can realize the sensing functions by using wireless resources of wireless communication; can utilize widely deployed cellular networks to enable sensing services over a larger area; can use a base station and a plurality of terminals for joint sensing to achieve higher sensing accuracy; and can re-use hardware modules of wireless communication to implement the sensing functions, thereby reducing costs. In short, the ISAC technology makes the future wireless communication system have sensing capability, providing a foundation for the future development of smart transportation, smart city, smart factory, drone and other services.

Distance measurement and velocity measurement play an important role in the sensing process. A distance from a target to a sensing node (measuring node), a signal transmission delay, a radial velocity and a signal Doppler offset can be measured and estimated through specific reference signals or signal sequences in the communication system. Depending on characteristics of measurement algorithms and communication signals, different reference signal mappings have a great influence on the measurement results. For example, during measurement of the time delay, the signal bandwidth *B* directly affects the accuracy (resolution) *Δτ* of time delay measurement, where $B \geq \frac{1}{Δτ}$. The frequency-domain interval *Δf* of the signals directly affects the maximum delay that can be measured, also known as the maximum ambiguity-free range *τₘₐₓ* of the delay, where $Δf \leq \frac{1}{{τ}_{max}}$. Correspondingly, the distance of signal transmission can be calculated by time delay measurement, and then the distance between the target and the sensing node can be obtained. During measurement of the Doppler offset, a duration *T_{f}* of a measurement signal directly affects the accuracy (resolution) Δ*f* of the measured Doppler offset, where ${T}_{f} \geq \frac{1}{Δ f}$. The time interval *Tₛ* of the signals during the duration directly affects the maximum range of measurement results, also known as the maximum ambiguity-free range *fₘₐₓ* of the Doppler offset, where ${T}_{s} \leq \frac{1}{\left|{f}_{max}\right|}$. According to the measured Doppler offset, the radial velocity of the target and the sensing node can be further calculated.

### 2. Reference Signal Sequence Generation

In a 5th Generation (5G) mobile communication system, a reference signal sequence is generated using a pseudo-random code (for example, a Gold code), and the initial factor corresponding to the reference signal sequence is directly related to an index of slot where the reference signal is located and a position of an Orthogonal Frequency Division Multiplexing (OFDM) symbol where it is located. That is, reference signal sequences at different time-domain positions are independently generated, and these reference signal sequences have good autocorrelation properties.

Taking a Demodulation Reference Signal (DMRS) and a Channel State Information Reference Signal (CSI-RS) as an example, an initial factor of a DMRS reference signal sequence of a Physical Downlink Control Channel (PDCCH) is as follows. ${c}_{init} = \left({2}^{17}\left({N}_{symb}^{slot}{n}_{s , f}^{μ}+l+1\right)\left(2{N}_{ID}+1\right)+2{N}_{ID}\right) mod {2}^{31}$

Here, *c*ᵢₙᵢₜ is the initial factor of the DMRS reference signal sequence, ${N}_{symb}^{slot}$ is a number of OFDM symbols (hereinafter referred to as symbols) in one slot, ${n}_{s , f}^{μ}$ is an index of a slot, where the DMRS is located, in the radio frame, *l* is an index of a symbol where the DMRS is located, and *N_{ID}* is a scrambling code number or cell identifier (ID) configured by the higher layer. The initial factor of the CSI-RS signal sequence is as follows. ${c}_{init} = \left({2}^{10}\left({N}_{symb}^{slot}{n}_{s , f}^{μ}+l+1\right)\left(2{n}_{ID}+1\right)+{n}_{ID}\right) mod {2}^{31}$

Here, *c*ᵢₙᵢₜ is the initial factor of the CSI-RS signal sequence, ${N}_{symb}^{slot}$ is a number of symbols in one slot, ${n}_{s , f}^{μ}$ is an index of a slot, where the CSI-RS is located, in a radio frame, *l* is an index of a symbol where the CSI-RS is located, and *n_{ID}* is a scrambling code number or cell ID configured by the higher layer.

### 3. Reference signal mapping manner

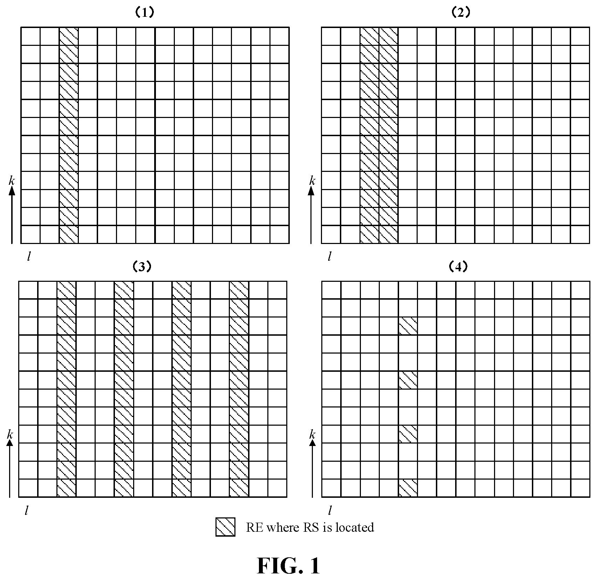

In a 5G system, the mapping manner of the reference signal follows the mapping principle of frequency-domain first and then time-domain, and after generating the reference signal sequence to be mapped, the reference signal sequence is mapped from low to high frequency-domain positions on specified symbols, thereby forming a reference signal mapping pattern that occupies one symbol or has an equally-spaced (comb-shaped) structure in one symbol. FIG. 1 illustrates a schematic diagram of mapping patterns of a reference signal provided by an exemplary embodiment of the disclosure. The horizontal axis in FIG. 1 represents time (time domain), the vertical axis represents frequency (frequency domain), the filled portion is a Resource Element (RE) occupied by the reference signal, and parts (1), (2) and (3) of FIG. 1 show reference signal mapping patterns in which the reference signal sequence is consecutively mapped from low to high frequency-domain positions respectively. Part (1) of FIG. 1 shows one reference signal sequence, which occupies a set of time-frequency resources, and the set of time-frequency resources has a same time-domain position and different frequency-domain positions. Part (2) of FIG. 1 shows two reference signal sequences, each reference signal sequence occupies a set of time-frequency resources, and the set of time-frequency resources occupied by each reference signal sequence has a same time-domain position and different frequency-domain positions. Part (3) of FIG. 1 shows four reference signal sequences, each reference signal sequence occupies a set of time-frequency resources, and the set of time-frequency resources occupied by each reference signal sequence has a same time-domain position and different frequency-domain positions. Part (4) of FIG. 1 shows a reference signal mapping pattern in which a reference signal sequence is mapped at equal intervals from low to high frequency-domain positions. Part (4) of FIG. 1 shows a reference signal sequence, which occupies a set of time-frequency resources, and the set of time-frequency resources has a same time-domain position and different frequency-domain positions.

Based on the above, it can be seen that the reference signal sequences occupying different time-domain positions are independently generated, and each reference signal sequence has good autocorrelation property. During sensing, especially sensing of a Doppler offset and velocity, it is necessary to measure signals over a period of time. The better the autocorrelation properties of signals in this period of time, the better the sensing performance. Clearly, there are no autocorrelation properties between different reference signal sequences in the related art, and thus the sensing performance cannot be guaranteed.

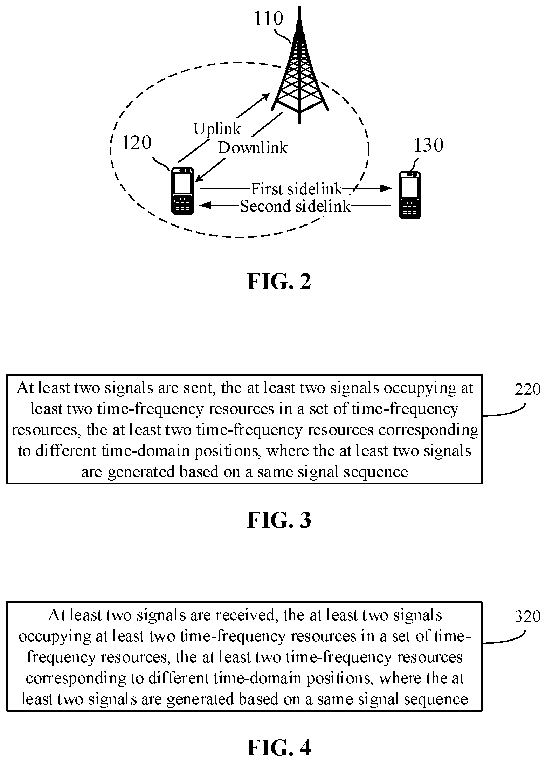

FIG. 2 illustrates a schematic diagram of a wireless communication system provided by an exemplary embodiment of the disclosure. The wireless communication system includes a network device 110 and a terminal device 120, and/or the terminal device 120 and a terminal device 130, which is not limited in the disclosure.

The network device 110 in the disclosure provides wireless communication functions, including but not limited to: an Evolved Node B (eNB), a Radio Network Controller (RNC), a Node B (NB), a Base Station Controller (BSC), a Base Transceiver Station (BTS), a home base station (e.g., a Home Evolved Node B, or Home Node B (HNB)), a base band unit (BBU), an Access Point (AP), a Wireless Fidelity (Wi-Fi) system, a wireless relay node, a wireless Backhaul node, a Transmission Point (TP), or a Transmission and Reception Point (TRP), or the like; and it may also be a Next Generation Node B (gNB) or a transmission point (TRP or TP) in a 5th Generation (5G) mobile communication system, or one or a group (including a plurality of antenna panels) of panels of a base station in a 5G system; or, it may also be a network node constituting a gNB or a transmission point, such as a BBU or a Distributed Unit (DU) or the like, a base station or the like in a Beyond Fifth Generation (B5G) or a 6th Generation (6G) mobile communication system, a Core Network (CN), a fronthaul, a backhaul, a Radio Access Network (RAN), a network slice or the like, or a serving cell, a Primary Cell (PCell), a Primary Secondary Cell (PSCell), a Special Cell (SpCell) or a Secondary Cell (Scell) of of a terminal device, or the like.

The terminal device 120 and/or the terminal device 130 in the embodiments of the disclosure may also be referred to as User Equipment (UE), an access terminal, a user unit, a user station, a mobile station, a remote station, a remote terminal, a mobile device, a user terminal, a terminal, a wireless communication device, a user agent or a user apparatus, etc. The terminal includes, but is not limited to, a handheld device, a wearable device, a vehicle device and an Internet of Things (IoT) device, such as a mobile phone, a tablet, an e-book reader, a laptop portable computer, a desktop computer, a television, a game console, a mobile Internet device (MID), an Augmented Reality (AR) terminal, a Virtual Reality (VR) terminal and a Mixed Reality (MR) terminal, a wearable device, a handle, an electronic tag, a controller, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a wireless terminal in remote medical surgery, a cellular telephone, a cordless telephone, a Session Initiation Protocol (SIP) telephone, a Wireless Local Loop (WLL) station, a Personal Digital Assistant (PDA), a television Set Top Box (STB), a Customer Premise Equipment (CPE), and the like.

The network device 110 and the terminal device 120 communicate with each other through some air interface technology, such as a Uu interface.

In some embodiments, there are two communication scenarios between the network device 110 and the terminal device 120: an uplink communication scenario and a downlink communication scenario. Herein, the uplink communication is to send a signal to the network device 110; and the downlink communication is to send a signal to the terminal device 120.

The terminal device 120 and the terminal device 130 communicate with each other through a certain direction communication interface, such as a PC5 interface.

In some embodiments, there are two kinds of communication scenarios between the terminal device 120 and the terminal device 130: a first sidelink communication scenario and a second sidelink communication scenario. The first sidelink communication is to send a signal to the terminal device 130; and the second sidelink communication is to send a signal to the terminal device 120.

In some embodiments, the terminal device 120 and the terminal device 130 are both within the network coverage and located in a same cell, or the terminal device 120 and the terminal device 130 are both within the network coverage but located in different cells, or the terminal device 120 is within the network coverage but the terminal device 130 is outside the network coverage.

The technical solutions provided by the embodiments of the disclosure can be applied to various communication systems, such as a Global System of Mobile communication (GSM) system, a Code Division Multiple Access (CDMA) system, and a Wideband Code Division Multiple Access (WCDMA) system, a General Packet Radio Service (GPRS), Long Term Evolution (LTE) system, a Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of the NR system, an LTE-based access to unlicensed spectrum (LTE-U) system, an NR-based access to unlicensed spectrum (NR-U) system, a Terrestrial Network (TN) system, a Non-Terrestrial Network (NTN) system, a Wireless Local Area Network (WLAN), a Wi-Fi system, a cellular Internet of Things system, and a cellular passive Internet of Things system, may also be applied to a subsequent evolution system of the 5G NR system, and may further be applied to the B5G, the 6G and and subsequent evolution system thereof. In some embodiments of the disclosure, the "NR" may also be referred to as a 5G NR system or a 5G system. The 5G mobile communication system may include Non-Standalone (NSA) and/or Standalone (SA).

The solutions provided by the embodiments of the disclosure may also be applied to a Machine Type Communication (MTC), a Long Term Evolution-Machine (LTE-M), a Device to Device (D2D) network, a Machine to Machine (M2M) network, and Internet of Things (IoT) network, or another network. Herein, the IoT network may include, for example, Internet of Vehicles (IoV). Herein, the communication modes in an IoV system are collectively referred to as vehicle to other devices (Vehicle to X, V2X, X may represent anything), and for example, the V2X may include: Vehicle to Vehicle (V2V) communication, Vehicle to Infrastructure (V2I) communication, Vehicle to Pedestrian (V2P) communication, Vehicle to Network (V2N) communication, and the like. The wireless communication system provided by the embodiment of the disclosure may be applied to, but is not limited to, at least one of the following communication scenarios: an uplink communication scenario, a downlink communication scenario, and a sidelink communication scenario.

It is to be noted that in the embodiments of the disclosure, a bandwidth for a downlink channel, a bandwidth configured for the downlink channel, a bandwidth for downlink transmission, a bandwidth for downlink data transmission, a bandwidth occupied by downlink transmission resources and the like have the same or similar meaning. Similarly, a bandwidth for an uplink channel, a bandwidth configured for the uplink channel, a bandwidth for uplink transmission, a bandwidth for uplink data transmission, a bandwidth occupied by uplink transmission resources and the like have the same or similar meanings. Similarly, a bandwidth for a sidelink channel, a bandwidth configured for the sidelink channel, a bandwidth for sidelink transmission, a bandwidth for sidelink data transmission, a bandwidth occupied by sidelink transmission resources and the like have the same or similar meanings.

FIG. 3 illustrates a schematic flowchart of a signal sending method provided by some embodiments of the disclosure. Schematic description is made by taking the method performed by a signal sending end device as an example. The method includes at least some of the operations below.

In **operation 220**, at least two signals are sent, the at least two signals occupying at least two time-frequency resources in a set of time-frequency resources, and the at least two time-frequency resources corresponding to different time-domain positions. The at least two signals are generated based on a same signal sequence.

In some embodiments, the signal sending end device is a terminal device or a network device, and the signal sending end device may also be referred to as a first node device, a sensing initiating node device, a sending node device, or a first sensing node device.

In summary, the signal sending end device in the embodiment of the disclosure sends at least two signals, the at least two signals occupying at least two time-frequency resources in a set of time-frequency resources, and the at least two time-frequency resources corresponding to different time-domain positions. The at least two signals are generated based on a same signal sequence. Since signals corresponding to the same signal sequence have autocorrelation properties, the method can guarantee the autocorrelation properties of at least two signals transmitted on different time-frequency resources, so that the sensing performance can be improved, which is beneficial to sensing measurement and sensing target detection.

In the sensing process, the signals used for measurement or detection are mostly reflected signals. Due to the influence of signal transmission environment, the reflected signals of signals sent in different time windows or different transmission opportunities may be superimposed in time. At this time, the autocorrelation properties of the signal sequence can be used to distinguish received signal sequence(s), so that the communication system is suitable for complex transmission environment.

In some embodiments, the signal sending end device sends different sets of signals in different sets of time-frequency resources, each set of signals including at least two signals. The different sets of time-frequency resources correspond to same time-domain positions and different frequency-domain positions, or the different sets of time-frequency resources correspond to different time-domain positions and same frequency-domain positions, or the different sets of time-frequency resources correspond to different time-domain positions and different frequency-domain positions; and the different sets of signals are generated based on a same signal sequence, or the different sets of signals are generated based on different signal sequences.

In summary, the signal sending end device in the embodiment of the disclosure sends different sets of signals in different sets of time-frequency resources, each set of signals including at least two signals. The different sets of signals are generated based on a same signal sequence, or the different sets of signals are generated based on different signal sequences. Herein, when the different sets of signals are generated based on a same signal sequence, the autocorrelation properties of the different sets of signals can be guaranteed, the sensing performance is improved, which is beneficial to sensing measurement and sensing target detection. When the different sets of signals are generated based on different signal sequences, signals corresponding to different signal sequences can be sent, and signal sending efficiency is improved.

In some embodiments, the method further includes an optional **operation 240** of receiving at least one of following configuration information: first configuration information, second configuration information, or third configuration information. Herein, the first configuration information is used for configuration of a transmission opportunity and/or time window, the second configuration information is used for configuration of time-domain resources of a set of time-frequency resources, and the third configuration information is used for configuration of frequency-domain resources of the set of time-frequency resources.

It is to be noted that the first configuration information, the second configuration information and the third configuration information may be used independently or in combination, for example, the network device or the signal receiving end device may configure only the first configuration information, only the second configuration information, or only the third configuration information. Or, the first configuration information and the second configuration information are simultaneously configured, or the first configuration information and the third configuration information are simultaneously configured, or the second configuration information and the third configuration information are simultaneously configured, or the first configuration information, the second configuration information and the third configuration information are simultaneously configured.

In summary, the signal sending end device in the embodiment of the disclosure, based on at least one of the first configuration information, the second configuration information or the third configuration information, enables at least two signals to be sent at different time-domain positions corresponding to a set of time-frequency resources. Since the at least two signals are generated based on the same signal sequence, the autocorrelation properties of the at least two signals can be guaranteed, and the sensing performance is improved, which is beneficial to sensing measurement and sensing target detection.

FIG. 4 illustrates a schematic flowchart of a signal receiving method provided by some embodiments of the disclosure. Schematic description is made by taking the method performed by a signal receiving end device as an example. The method includes at least some of the operations below.

In **operation 320**, at least two signals are received, the at least two signals occupying at least two time-frequency resources in a set of time-frequency resources, and the at least two time-frequency resources corresponding to different time-domain positions. The at least two signals are generated based on a same signal sequence.

In some embodiments, the signal receiving end device is a terminal device or a network device, and the signal receiving end device may also be referred to as a second node device, a sensing receiving node device, a receiving node device, or a second sensing node device.

In summary, the signal receiving end device in the embodiment of the disclosure receives at least two signals, the at least two signals occupying at least two time-frequency resources in a set of time-frequency resources, and the at least two time-frequency resources corresponding to different time-domain positions. The at least two signals are generated based on a same signal sequence. Since signals corresponding to the same signal sequence have autocorrelation properties, the method can guarantee the autocorrelation properties of at least two signals transmitted on different time-frequency resources, so that the sensing performance can be improved, which is beneficial to sensing measurement and sensing target detection.

In the sensing process, the signals used for measurement or detection are mostly reflected signals. Due to the influence of signal transmission environment, the reflected signals of signals received in different time windows or different transmission opportunities may be superimposed in time. At this time, the autocorrelation properties of the signal sequence can be used to distinguish received signal sequence(s), so that the communication system is suitable for complex transmission environment.

In some embodiments, the signal receiving end device receives different sets of signals in different sets of time-frequency resources, each set of signals including at least two signals. The different sets of time-frequency resources correspond to same time-domain positions and different frequency-domain positions, or the different sets of time-frequency resources correspond to different time-domain positions and same frequency-domain positions, or the different sets of time-frequency resources correspond to different time-domain positions and different frequency-domain positions; and the different sets of signals are generated based on a same signal sequence, or the different sets of signals are generated based on different signal sequences.

In summary, the signal receiving end device in the embodiment of the disclosure receives different sets of signals in different sets of time-frequency resources, each set of signals including at least two signals. The different sets of signals are generated based on a same signal sequence, or the different sets of signals are generated based on different signal sequences. Herein, when the different sets of signals are generated based on a same signal sequence, the autocorrelation properties of the different sets of signals can be guaranteed, the sensing performance is improved, which is beneficial to sensing measurement and sensing target detection. When the different sets of signals are generated based on different signal sequences, signals corresponding to different signal sequences can be received, and signal receiving efficiency is improved.

In some embodiments, the method further includes an optional **operation 340** of receiving at least one of following configuration information: first configuration information, second configuration information, or third configuration information. Or, the method further includes an optional **operation 360** of sending at least one of following configuration information: first configuration information, second configuration information, or third configuration information. Herein, the first configuration information is used for configuration of a transmission opportunity and/or time window, the second configuration information is used for configuration of time-domain resources of a set of time-frequency resources, and the third configuration information is used for configuration of frequency-domain resources of the set of time-frequency resources.

It is to be noted that the first configuration information, the second configuration information and the third configuration information may be used independently or in combination, for example, the network device or the signal receiving end device may configure only the first configuration information, only the second configuration information, or only the third configuration information. Or, the first configuration information and the second configuration information are simultaneously configured, or the first configuration information and the third configuration information are simultaneously configured, or the second configuration information and the third configuration information are simultaneously configured, or the first configuration information, the second configuration information and the third configuration information are simultaneously configured.

In summary, the signal receiving end device in the embodiment of the disclosure, based on at least one of the first configuration information, the second configuration information or the third configuration information, enables at least two signals to be received at different time-domain positions corresponding to a set of time-frequency resources. Since the at least two signals are generated based on the same signal sequence, the autocorrelation properties of the at least two signals can be guaranteed, and the sensing performance is improved, which is beneficial to sensing measurement and sensing target detection.

In alternative embodiments illustrated based on FIG. 3 or FIG. 4, related contents are described as follows.

### 1. Signal

In some embodiments, the signal may also be referred to as a sensing signal or a reference signal. The term "sensing" may also be equivalent to or replaced by at least one of: positioning, ranging, velocity measurement, angle measurement, target imaging, target detection, target tracking, or target recognition.

In some embodiments, the signal includes at least one of: Demodulation Reference Signal (DMRS); Sounding Reference Signal (SRS); Enhanced-SRS (E-SRS); Carrier Phase Reference Signal (CPRS); or Channel State Information Reference Signal (CSI-RS).

### 2. Signal sequence

In some embodiments, the signal sequence is a random signal sequence having autocorrelation properties. The signals are generated based on the signal sequence.

Optionally, the signal sequence is at least one of a pseudo-random sequence (Gold sequence) or an Euler complex sequence (ZC sequence).

In some embodiments, at least one of a length of the signal sequence, a number of signals corresponding to the signal sequence or a transmission time length of the signal sequence may be determined according to an agreement, or may be determined according to the first configuration information, or may be determined according to the second configuration information.

In some embodiments, the at least two signals are generated based on a same signal sequence.

Optionally, the signal sequence includes at least two sequence segments, each signal of the at least two signals is generated based on one sequence segment of the same signal sequence, and different signals occupy different sequence segments. Numbers of bits corresponding to the at least two sequence segments may be the same or different.

In some embodiments, a case where the signal sequence includes at least two sequence segments and the numbers of bits corresponding to the at least two sequence segments are the same is taken as an example. For example, a signal sequence includes 8 bits, and there are 4 sequence segments in the signal sequence, each corresponding to 2 bits. Then the signal sequence is used to generate four signals, namely signal 1, signal 2, signal 3 and signal 4, wherein signal 1 may be generated based on the first and second bits, signal 2 may be generated based on the third and fourth bits, signal 3 may be generated based on the fifth and sixth bits, and signal 4 may be generated based on the seventh and eighth bits.

### 3. A set of time-frequency resources

In some embodiments, the set of time-frequency resources includes at least two time-frequency resources. The at least two time-frequency resources correspond to at least two time-domain positions and a same frequency-domain position. Or, the at least two time-frequency resources correspond to at least two time-domain positions and at least two frequency-domain positions.

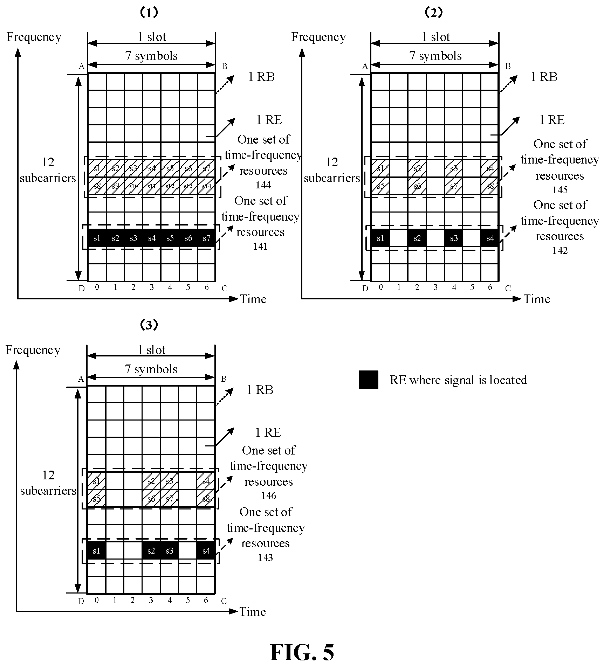

In some embodiments, a case where the set of time-frequency resources includes at least two time-frequency resources and the at least two time-frequency resources correspond to at least two time-domain positions and the same frequency-domain position is taken as an example. FIG. 5 illustrates a schematic diagram of time-frequency resources provided by an exemplary embodiment of the disclosure. The horizontal axis in FIG. 5 represents time (time domain), and the vertical axis represents frequency (frequency domain). A physical resource corresponding to 1 subcarrier in the frequency domain and 1 Symbol in the time domain is called 1 Resource Element (RE). The physical resources corresponding to 12 consecutive subcarriers in the frequency domain and 1 slot in the time domain are called 1 Resource Block (RB), and 1 slot includes 7 symbols. Part (1) of FIG. 5 shows a set of time-frequency resources 141, which includes 7 time-frequency resources consecutive in the time domain. The 7 time-frequency resources consecutive in the time domain correspond to 7 time-domain positions and 1 frequency-domain position. Part (2) of FIG. 5 shows a set of time-frequency resources 142, which includes 4 time-frequency resources equally spaced in the time domain, with a time interval between any two adjacent time-frequency resources being 1. The 4 time-frequency resources equally spaced in the time domain correspond to 4 time-domain positions and 1 frequency-domain position. Part (3) of FIG. 5 shows a set of time-frequency resources 143, which includes 4 time-frequency resources non-equally spaced in the time domain, with the time intervals being 0, 1, or 2. The 4 time-frequency resources non-equally spaced in the time domain are arranged from earliest to latest according to time-domain positions as a time-frequency resource 1, a time-frequency resource 2, a time-frequency resource 3, and a time-frequency resource 4. Herein, the time interval between the time-frequency resource 1 and the time-frequency resource 2 is 2, the time interval between the time-frequency resource 2 and the time-frequency resource 3 is 0, and the time interval between the time-frequency resource 3 and the time-frequency resource 4 is 1. The 4 time-frequency resources non-equally spaced in the time domain correspond to 4 time-domain positions and 1 frequency-domain position.

In some embodiments, a case where the set of time-frequency resources includes at least two time-frequency resources and the at least two time-frequency resources correspond to at least two time-domain positions and at least two frequency-domain positions is taken as an example. FIG. 5 illustrates a schematic diagram of time-frequency resources provided by an exemplary embodiment of the disclosure. Part (1) of FIG. 5 shows a set of time-frequency resources 144, which includes 14 time-frequency resources. Herein, there are 7 time-frequency resources consecutive in the time domain at a same frequency-domain position, then the 14 time-frequency resources correspond to 7 time-domain positions and 2 frequency-domain positions. Part (2) of FIG. 5 shows a set of time-frequency resources 145, which includes 8 time-frequency resources. Herein, there are 4 time-frequency resources equally spaced in the time domain at a same frequency-domain position, with the time interval between any two adjacent time-frequency resources being 1, then the 8 time-frequency resources correspond to 4 time-domain positions and 2 frequency-domain positions. Part (3) of FIG. 5 shows a set of time-frequency resources 146, which includes 8 time-frequency resources. Herein, there are 4 time-frequency resources non-equally spaced in the time domain at a same frequency-domain position, with the time intervals being 0, 1, or 2. Taking 4 time-frequency resources with the highest frequency-domain position and the time-domain positions arranged from the earliest to the latest as an example, they are sequentially a time-frequency resource 1, a time-frequency resource 2, a time-frequency resource 3, and a time-frequency resource 4. Herein, the time interval between the time-frequency resource 1 and the time-frequency resource 2 is 2, the time interval between the time-frequency resource 2 and the time-frequency resource 3 is 0, and the time interval between the time-frequency resource 3 and the time-frequency resource 4 is 1. Then, the 8 time-frequency resources correspond to 4 time-domain positions and 2 frequency-domain positions.

In some embodiments, the set of time-frequency resources are consecutive in the time domain or spaced in the time domain.

Optionally, the term "spaced" may be "equally spaced". "Equally spaced" means that time intervals between any two adjacent time-frequency resources in the set of time-frequency resources are the same; or means that the time intervals between any n-th time-frequency resource and corresponding (n+1)-th time-frequency resource in the set of time-frequency resources are the same, where n is greater than or equal to 0; or means that time intervals between any adjacent signal transmissions for at least two signals are the same. Or, "Equally spaced" means that time intervals between a transmission start time of any j-th signal and a transmission start time of corresponding (j+1)-th signal among the at least two signals are the same.

Optionally, the term "spaced" may also be "non-equally spaced". "Non-equally spaced" means that among the set of time-frequency resources, there are at least two adjacent time-frequency resources whose time interval is different from a time interval between other two adjacent time-frequency resources; or for at least two signals, there are at least two adjacent signal transmissions whose time interval is different from a time interval between other two adjacent signal transmissions. Or, "non-equally spaced" means that for at least two signals, there is a time interval between a transmission start time of at least one j-th signal and a transmission start time of a (j+1)-th signal, which is different from a time interval between a transmission start time of another j-th signal and a transmission start time of corresponding (j+1)-th signal.

In some embodiments, a time interval corresponding to the set of time-frequency resources is related to at least one of:

a time interval between adjacent signal transmissions for the at least two signals; or a time interval between a transmission start time of a j-th signal and a transmission start time of a (j+1)-th signal among the at least two signals, where j is greater than or equal to 0.

In some embodiments, the time interval corresponding to the set of time-frequency resources is related to the time interval between adjacent signal transmissions for the at least two signals. Herein, the time interval corresponding to the set of time-frequency resources may be determined based on the time interval between adjacent signal transmissions for the at least two signals, or the time interval between adjacent signal transmissions for the at least two signals may be determined based on the time interval corresponding to the set of time-frequency resources. Optionally, the time interval corresponding to the set of time-frequency resources is equal to the time interval between adjacent signal transmissions for the at least two signals.

Optionally, the term "spaced" may be "equally spaced". Then, time intervals between any adjacent signal transmissions are the same for the at least two signals. The term "spaced" may also be "non-equally spaced". Then, for the at least two signals, there are two adjacent signal transmissions whose time interval is different from a time interval between other two adjacent signal transmissions. The term "spaced" may also mean a combination of the "equally spaced" and the "non-equally spaced".

In some embodiments, the time interval corresponding to the set of time-frequency resources is related to the time interval between the transmission start time of the j-th signal and the transmission start time of the (j+1)-th signal among the at least two signals, where j is greater than or equal to 0. Herein, the time interval corresponding to the set of time-frequency resources may be determined based on the time interval between the transmission start time of the j-th signal and the transmission start time of the (j+1)-th signal among the at least two signals, or the time interval between the transmission start time of the j-th signal and the transmission start time of the (j+1)-th signal among the at least two signals may be determined based on the time interval corresponding to the set of time-frequency resources. Optionally, the time interval corresponding to the set of time-frequency resources is equal to the time interval between the transmission start time of the j-th signal and the transmission start time of the (j+1)-th signal among the at least two signals.

Optionally, the term "spaced" may be "equally spaced". Then, the time intervals between the transmission start time of any j-th signal and the transmission start time of corresponding (j+1)-th signal are the same for the at least two signals. The term "spaced" may also be "non-equally spaced". Then, for at least two signals, the time interval between the transmission start time of at least one j-th signal and the transmission start time of the (j+1)-th signal is different from the time interval between the transmission start time of another j-th signal and the transmission start time of corresponding (j+1)-th signal. The term "spaced" may also mean a combination of the "equally spaced" and the "non-equally spaced".

In some embodiments, the set of time-frequency resources are consecutive in the time domain, then the time interval corresponding to the set of time-frequency resources is configured to be 0 or default.

In some embodiments, at least two signals are received, the at least two signals occupying at least two time-frequency resources in a set of time-frequency resources, and the at least two time-frequency resources corresponding to different time-domain positions. Herein, each of the at least two signals occupy one time-frequency resource.

Optionally, the at least two time-frequency resources correspond to different time-domain positions, and correspond to a same frequency-domain position. Or, the at least two time-frequency resources correspond to different time-domain positions, and part of the at least two time-frequency resources correspond to different frequency-domain positions.

In some embodiments, the at least two signals occupy at least two time-frequency resources in a set of time-frequency resources, wherein each of the at least two signals occupy one time-frequency resource, and the at least two time-frequency resources correspond to different time-domain positions, and to a same frequency-domain position. Taking the signal sending end device to send at least two signals as an example, part (1) in FIG. 5 shows a set of time-frequency resources 141, which includes 7 time-frequency resources consecutive in the time domain, arranged from the earliest to the latest according to time-domain positions, i.e., a time-frequency resource 1, a time-frequency resource 2, a time-frequency resource 3, a time-frequency resource 4, a time-frequency resource 5, a time-frequency resource 6, and a time-frequency resource 7. Herein, the signal sending end device sends a signal 1 occupying the time-frequency resource 1, sends a signal 2 occupying the time-frequency resource 2, sends a signal 3 occupying the time-frequency resource 3, sends a signal 4 occupying the time-frequency resource 4, sends a signal 5 occupying the time-frequency resource 5, sends a signal 6 occupying the time-frequency resource 6, and sends a signal 7 occupying the time-frequency resource 7. The time-frequency resource 1, the time-frequency resource 2, the time-frequency resource 3, the time-frequency resource 4, the time-frequency resource 5, the time-frequency resource 6 and the time-frequency resource 7 correspond to different time-domain positions, and correspond to a same frequency-domain position. When the signal receiving end device receives at least two signals, the sending step of the signal sending end device may be replaced with the receiving step of the signal receiving end device.

In some embodiments, the at least two signals occupy at least two time-frequency resources in a set of time-frequency resources, wherein each of the at least two signals occupy one time-frequency resource, and part of the at least two time-frequency resources correspond to different time-domain positions, and to different frequency-domain positions. Taking the signal sending end device to send at least two signals as an example, part (1) in FIG. 5 shows a set of time-frequency resources 144, which includes 14 time-frequency resources, arranged from the earliest to the latest according to time-domain positions, i.e., a time-frequency resource 1, a time-frequency resource 2, a time-frequency resource 3, a time-frequency resource 4, a time-frequency resource 5, a time-frequency resource 6, a time-frequency resource 7, a time-frequency resource 8, a time-frequency resource 9, a time-frequency resource 10, a time-frequency resource 11, a time-frequency resource 12, a time-frequency resource 13, and a time-frequency resource 14. Herein, the signal sending end device sends a signal 1 occupying the time-frequency resource 1, sends a signal 2 occupying the time-frequency resource 2, sends a signal 3 occupying the time-frequency resource 3, sends a signal 4 occupying the time-frequency resource 4, sends a signal 5 occupying the time-frequency resource 5, sends a signal 6 occupying the time-frequency resource 6, sends a signal 7 occupying the time-frequency resource 7, sends a signal 8 occupying the time-frequency resource 8, sends a signal 9 occupying the time-frequency resource 9, sends a signal 10 occupying the time-frequency resource 10, sends a signal 11 occupying the time-frequency resource 11, sends a signal 12 occupying the time-frequency resource 12, sends a signal 13 occupying the time-frequency resource 13, and sends a signal 14 occupying the time-frequency resource 14. The time-frequency resource 1 and the time-frequency resource 8, the time-frequency resource 2 and the time-frequency resource 9, the time-frequency resource 3 and the time-frequency resource 10, the time-frequency resource 4 and the time-frequency resource 11, the time-frequency resource 5 and the time-frequency resource 12, the time-frequency resource 6 and the time-frequency resource 13, and the time-frequency resource 7 and the time-frequency resource 14 each correspond to the same time-domain position and different frequency-domain positions. The time-frequency resources 1 to 7 correspond to different time-domain positions and to the same frequency-domain position, and the time-frequency resources 8 to 14 correspond to different time-domain positions and to the same frequency-domain position. When the signal receiving end device receives at least two signals, the sending step of the signal sending end device may be replaced with the receiving step of the signal receiving end device.

### 3.1 Same Transmission Opportunity

In some embodiments, a set of time-frequency resources are time-frequency resources within a same transmission opportunity.

In some embodiments, the signal sending end device sends at least two signals within the same transmission opportunity, and the signal receiving end device receives the at least two signals within the same transmission opportunity. Herein, the at least two signals occupy at least two time-frequency resources in a set of time-frequency resources, the at least two time-frequency resources correspond to different time-domain positions, and the at least two signals are generated based on a same signal sequence.

In some embodiments, within a same transmission opportunity, the set of time-frequency resources are consecutive in the time domain or spaced in the time domain.

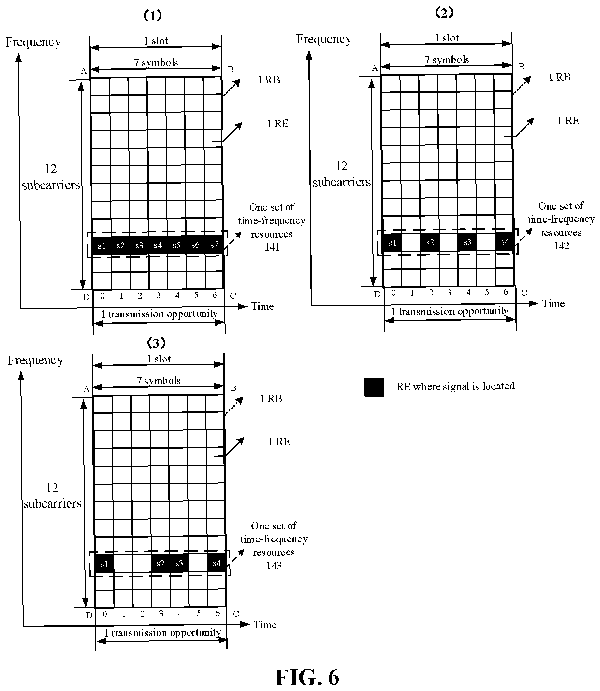

In some embodiments, FIG. 6 illustrates a schematic diagram of a transmission opportunity provided by an exemplary embodiment of the disclosure. The horizontal axis in FIG. 6 represents time (time domain), and the vertical axis represents frequency (frequency domain). A physical resource corresponding to 1 subcarrier in the frequency domain and 1 Symbol in the time domain is called 1 Resource Element (RE). The physical resources corresponding to 12 consecutive subcarriers in the frequency domain and 1 slot in the time domain are called 1 Resource Block (RB), and 1 slot includes 7 symbols. The set of time-frequency resources 141 shown in part (1) of FIG. 6 are time-frequency resources consecutive in the time domain within the same transmission opportunity, the set of time-frequency resources 142 shown in part (2) of FIG. 6 are time-frequency resources equally spaced in the time domain within the same transmission opportunity, and the set of time-frequency resources 143 shown in part (3) of FIG. 6 are time-frequency resources non-equally spaced in the time domain within the same transmission opportunity.

In some embodiments, the transmission opportunity is periodic.

In some embodiments, a period of the transmission opportunity is configured by the first configuration information, and the transmission opportunity may occur within the period. Optionally, a length of the transmission opportunity may be equal to a length of the period. Alternatively, the length of the transmission opportunity may be less than the length of the period. Herein, the length refers to a time length or occupied time length. The time length may be expressed in absolute time or a number of time-domain units, and the time-domain units may be symbols or slots. When the time-domain units are symbols, the time-domain units may also be referred to as time units. The length of the transmission opportunity refers to a time interval between a start time and an end time of the transmission opportunity. The length of the period refers to a time interval between a start time and an end time of the period.

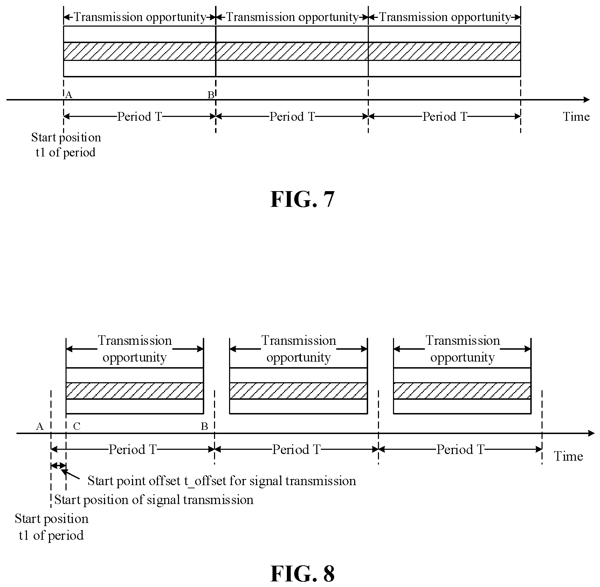

In some embodiments, FIG. 7 illustrates a schematic diagram of a transmission opportunity provided by an exemplary embodiment of the disclosure. The horizontal axis in FIG. 7 represents time. A time interval between a time point A and a time point B is a period T in which a transmission opportunity can occur. The length of the transmission opportunity in FIG. 7 is the same as the length of the period, and the signal may be transmitted from a start position A of the transmission opportunity, i.e. the signal is transmitted from a start position t1 of the period.

In some embodiments, FIG. 8 illustrates a schematic diagram of a transmission opportunity provided by an exemplary embodiment of the disclosure. The horizontal axis in FIG. 8 represents time, where a time interval between a time point A and a time point B is a period T in which a transmission opportunity can occur, and the length of the transmission opportunity is less than the length of the period. The signal may be transmitted from a start position C of the transmission opportunity, and there is a signal transmission start offset t_offset between the start position C of the transmission opportunity and the start position A of the period.

In some embodiments, the transmission opportunity is signaling triggered.

In some embodiments, the signaling may also be referred to as at least one of indication signaling, trigger signaling, or transmission opportunity trigger signaling.

In some embodiments, the types of signaling include at least one of: Radio Resource Control (RRC) signaling; Non Access Stratum (NAS) signaling; Media Access Control (MAC) signaling; or Downlink Control Information (DCI).

It is to be noted that the signaling for triggering the time window and the signaling for triggering the transmission opportunity may be of the same type or different types.

In some embodiments, the signal sending end device or the signal receiving end device receives signaling for triggering a transmission opportunity.

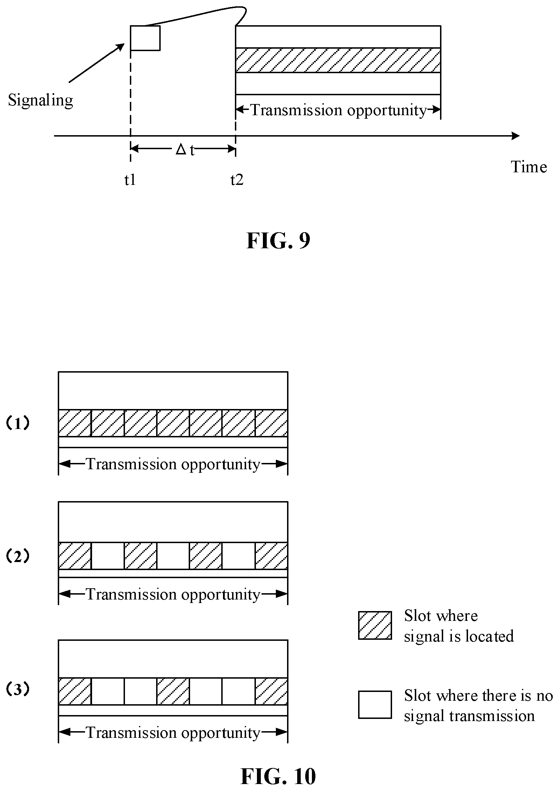

In some embodiments, FIG. 9 illustrates a schematic diagram of a transmission opportunity provided by an exemplary embodiment of the disclosure. The signal sending end device or the signal receiving end device receives, at time t1, signaling for triggering a transmission opportunity. The signaling may indicate that the start position of the transmission opportunity is time t2, the length of the transmission opportunity is L, and the transmission duration of the signal is L. Alternatively, the signaling may indicate that the start position of the transmission opportunity is a position corresponding to the time Δ t after the time t1, that is, the start position of the transmission opportunity is t1+Δ t, the length of the transmission opportunity is L, and the transmission duration of the signal is L. Optionally, t2 and Δ T may be indicated in the signaling, or may be agreed in a protocol or pre-configured. L may be indicated in the signaling, may be agreed in a protocol or pre-configured, or may be determined according to a number of signals corresponding to the signal sequence and the time-domain mapping manner of at least two signals.

In some embodiments, the transmission opportunity is configured by the first configuration information.

In some embodiments, the first configuration information is used for configuring at least one of: a length of the transmission opportunity; a period of the transmission opportunity; a start position of a signal transmission within the transmission opportunity; a time-domain mapping manner of the at least two signals; or a frequency-domain mapping manner of the at least two signals.

In some embodiments, the length of the transmission opportunity refers to a duration corresponding to the transmission opportunity.

In some embodiments, the length of the transmission opportunity is related to at least one of:
a number of signals corresponding to the signal sequence; a transmission time length of the signal sequence; a time interval between a start time of a first one of signals corresponding to the signal sequence and a start time of a last one of the signals; a time interval between the start time of the first one of signals corresponding to the signal sequence and an end time of the last one of the signals; a length of a time-domain unit for mapping the signal sequence; a number of time-domain units for mapping the signal sequence; or a time interval between the time-domain units for mapping the signal sequence, wherein each time-domain unit is used for mapping at least one signal.

In some embodiments, the length of the transmission opportunity is related to the number of signals corresponding to the signal sequence. Herein, the number of signals corresponding to the signal sequence may be determined based on the length of the transmission opportunity, or the length of the transmission opportunity may be determined based on the number of signals corresponding to the signal sequence. Optionally, the length of the transmission opportunity is positively correlated with the number of signals corresponding to the signal sequence, and the more the number of signals corresponding to the signal sequence, the longer the length of the transmission opportunity. For example, if the number of signals corresponding to the signal sequence is 4, where each signal occupies 1 symbol, then a set of time-frequency resources needs to include at least 4 symbols, and the length of the transmission opportunity is at least 4 symbols.

In some embodiments, the length of the transmission opportunity is related to the transmission time length of the signal sequence. Herein, the transmission time length of the signal sequence may be determined according to the length of the transmission opportunity, or the length of the transmission opportunity may be determined according to the transmission time length of the signal sequence. Optionally, the length of the transmission opportunity is greater than or equal to the transmission time length of the signal sequence. For example, if the transmission time of the signal sequence is 10 milliseconds, the length of the transmission opportunity is greater than or equal to 10 milliseconds.

In some embodiments, the length of the transmission opportunity is related to the time interval between a start time of a first one of signals corresponding to the signal sequence and a start time of a last one of the signals. Herein, the time interval between a start time of a first one of signals corresponding to the signal sequence and a start time of a last one of the signals may be determined according to the length of the transmission opportunity, or the length of the transmission opportunity may be determined according to the time interval between a start time of a first one of signals corresponding to the signal sequence and a start time of a last one of the signals. Optionally, the length of the transmission opportunity is greater than the time interval between a start time of a first one of signals corresponding to the signal sequence and a start time of a last one of the signals. Optionally, the length of the transmission opportunity is equal to a sum of the time interval and a signal transmission duration of the last signal. The signal transmission duration of the last signal may be pre-configured, or agreed upon in the protocol.

In some embodiments, the length of the transmission opportunity is related to the time interval between the start time of the first one of signals corresponding to the signal sequence and an end time of the last one of the signals. Herein, the time interval between the start time of the first one of signals corresponding to the signal sequence and an end time of the last one of the signals may be determined according to the length of the transmission opportunity, or the length of the transmission opportunity may be determined according to the time interval between the start time of the first one of signals corresponding to the signal sequence and an end time of the last one of the signals. Optionally, the length of the transmission opportunity is greater than or equal to the time interval between the start time of the first one of signals corresponding to the signal sequence and an end time of the last one of the signals. For example, if the time interval between the start time of the first one of signals corresponding to the signal sequence and an end time of the last one of the signals is 10 milliseconds, the length of the transmission opportunity is greater than or equal to 10 milliseconds.

In some embodiments, the time interval is represented by at least one of: N symbols; N slots; N frames; N milliseconds (ms); N seconds (s), wherein N is greater than or equal to 0, or N is greater than or equal to 1.

In some embodiments, the length of the transmission opportunity is related to the length of the time-domain unit for mapping the signal sequence. Herein, the length of the time-domain unit for mapping the signal sequence may be determined according to the length of the transmission opportunity, or the length of the transmission opportunity may be determined according to the length of the time-domain unit for mapping the signal sequence. Optionally, the length of the transmission opportunity is greater than or equal to a total length of the time-domain units for mapping the signal sequence, where the total length means a sum of lengths of respective time-domain units used for mapping the signal sequence.

In some embodiments, the time-domain unit is at least one time unit for mapping a signal sequence. Here, time units are the basic units of signal mapping, and each time unit is used for mapping one signal. For example, the time unit is configured as a symbol. Since the time-domain unit is at least one time unit, each time-domain unit is used for mapping at least one signal.

In some embodiments, the time-domain unit is at least one of a first time-domain unit or a second time-domain unit, each of the second time-domain units including at least two first time-domain units, and each of the first time-domain units being used for mapping one signal. Optionally, the first time-domain unit is configured as a symbol, and the second time-domain unit is configured as a slot.

In some embodiments, the length of the time-domain unit used for mapping the signal sequence includes at least one of: a length of the first time-domain unit used for mapping the signal sequence; or a length of the second time-domain unit used for mapping the signal sequence.

In some embodiments, the length of the transmission opportunity is greater than or equal to the total length of the time-domain units used for mapping the signal sequence. The total length of the time-domain units used for mapping the signal sequence refers to a sum of lengths of respective first time-domain units used for mapping the signal sequence, or a sum of lengths of respective second time-domain units used for mapping the signal sequence.

In some embodiments, the length of the transmission opportunity is related to the number of time-domain units for mapping the signal sequence. Herein, the number of time-domain units for mapping the signal sequence may be determined according to the length of the transmission opportunity, or the length of the transmission opportunity may be determined according to the number of time-domain units for mapping the signal sequence. Optionally, the length of the transmission opportunity is greater than or equal to a total length of the time-domain units used for mapping the signal sequence, the total length being equal to the length of a single time-domain unit multiplied by the number of time-domain units.

In some embodiments, the length of the time-domain unit used for mapping the signal sequence includes at least one of: a number of first time-domain units used for mapping the signal sequence; or a number of second time-domain units used for mapping the signal sequence.

In some embodiments, the length of the transmission opportunity is greater than or equal to the total length of the time-domain units used for mapping the signal sequence. Herein, the total length of the time-domain units used for mapping the signal sequence refers to the length of a single first time-domain unit used for mapping the signal sequence multiplied by the number of first time-domain units, or the length of a single second time-domain unit used for mapping the signal sequence multiplied by the number of second time-domain units.

In some embodiments, the length of the transmission opportunity is related to the time interval between the time-domain units for mapping the signal sequence Here, the time interval between the time-domain units for mapping the signal sequence may be determined according to the length of the transmission opportunity, or the length of the transmission opportunity may be determined according to the time interval between the time-domain units for mapping the signal sequence. Optionally, the length of the transmission opportunity is greater than or equal to the sum of a total time interval corresponding to the time-domain units and a total length corresponding to the time-domain units. Herein, the total time interval refers to a sum of respective time intervals between the time-domain units used for mapping the signal sequence, and the total length refers to a sum of lengths of the time-domain units used for mapping the signal sequence.

In some embodiments, the time interval between time-domain units for mapping the signal sequence includes at least one of: a time interval between the first time-domain units for mapping the signal sequence; or a time interval between the second time-domain units for mapping the signal sequence.

In some embodiments, the length of the transmission opportunity is greater than or equal to a sum of a total time interval corresponding to the first time-domain units and a total length corresponding to the first time-domain units. Herein, the total time interval refers to a sum of respective time intervals between the first time-domain units used for mapping the signal sequence, and the total length refers to a sum of lengths of the first time-domain units used for mapping the signal sequence. Or, the length of the transmission opportunity is greater than or equal to a sum of a total time interval corresponding to the second time-domain units and a total length corresponding to the second time-domain units. Herein, the total time interval refers to a sum of respective time intervals between the second time-domain units for mapping the signal sequence, and the total length refers to a sum of lengths of the second time-domain units for mapping the signal sequence.

In some embodiments, the period is configured by the first configuration information, and the transmission opportunity may occur within the period.

In some embodiments, the length of the transmission opportunity is equal to the length of the period, then the start position of the transmission opportunity is the same as the start position of the period. Or, if the length of the transmission opportunity is less than the length of the period, the start position of the transmission opportunity is later than the start position of the period. A time offset between the start position of the transmission opportunity and the start position of the period may be referred to as the signal transmission start offset.

In some embodiments, the length of the transmission opportunity may not be configured if the length of the transmission opportunity is equal to the length of the period.

In some embodiments, the first configuration information may also be used to configure at least one of: a number of periods of transmission opportunities, or a number of times of transmission opportunities. When the number of periods of the transmission opportunities or the number of times of the transmission opportunities is not configured in the first configuration information, the number of periods of the transmission opportunities and the number of times of the transmission opportunities may be extended indefinitely in time until the signal sending end device or the signal receiving end device receives signaling and terminates or reconfigures the period or the transmission opportunity.

In some embodiments, the period of the transmission opportunity is related to at least one of: a transmission period of the signal sequence; or a time interval between a start time of an i-th signal sequence and a start time of an (i+l)-th signal sequence, where i is greater than or equal to 0.

In some embodiments, the transmission period of the signal sequence includes a time interval between the i-th signal sequence and the (i+1)-th signal sequence, where i is greater than or equal to 0. For example, the transmission period of the signal sequence may be a time interval between a start position of a signal transmission of a first one of signals in the i-th signal sequence and a start position of a signal transmission of a first one of signals corresponding to the (i+1)-th signal sequence. The period of the transmission opportunity is related to the transmission period of the signal sequence. Herein, the transmission period of the signal sequence may be determined according to the period of the transmission opportunity, or the period of the transmission opportunity may be determined according to the transmission period of the signal sequence. Optionally, the period of the transmission opportunity is greater than or equal to the transmission period of the signal sequence.

In some embodiments, the start time of the i-th signal sequence is a start position of a signal transmission of a first one of signals corresponding to the i-th signal sequence, where i is greater than or equal to 0. The start time of the (i+1)-th signal sequence is a start position of a signal transmission of a first one of signals corresponding to the (i+1)-th signal sequence. The period of the transmission opportunity is related to the time interval between the start time of the i-th signal sequence and the start time of the (i+1)-th signal sequence. Herein, the time interval between the start time of the i-th signal sequence and the start time of the (i+1)-th signal sequence may be determined according to the period of the transmission opportunity, or the period of the transmission opportunity may be determined according to the time interval between the start time of the i-th signal sequence and the start time of the (i+1)-th signal sequence. Optionally, the period of the transmission opportunity is greater than or equal to the time interval between the start time of the i-th signal sequence and the start time of the (i+l)-th signal sequence.

In some embodiments, as shown in FIG. 7, the length between the time point A and the time point B is the transmission period of the signal sequence, and the period of the transmission opportunity may be indicated by the transmission period of the signal sequence. Taking i =1 as an example, the start time of the first signal sequence is a time point A, the end time of the first signal sequence is a time point B, and the start time of the second signal sequence is the time point B, then the period of the transmission opportunity may be indicated by a time interval between the start time of the first signal sequence and the start time of the second signal sequence.

In some embodiments, the start position of the signal transmission within the transmission opportunity refers to a start position of a signal transmission of the first one of signals corresponding to the signal sequence. The start position of the signal transmission within the transmission opportunity may also be referred to as a signal transmission start or a signal transmission starting time point.

In some embodiments, the start position of the signal transmission within the transmission opportunity may be the same as the start position of the transmission opportunity. Herein, when the length of the transmission opportunity is equal to the length of the period, the start position of the signal transmission within the transmission opportunity is the start position of the period. Exemplarily, the start position of the signal transmission within the transmission opportunity is the start position of the transmission opportunity, and the end position of the signal transmission within the transmission opportunity is the end position of the transmission opportunity.

In the embodiment, if the set of time-frequency resources are time-frequency resources located in the same transmission opportunity, the start position of the transmission opportunity is the same as the start position of signal transmission, and the end position of the transmission opportunity is also the same as the end position of signal transmission, then the length of the transmission opportunity is equal to the transmission time length of the signal sequence, i.e., the transmission opportunity is determined when the set of time-frequency resources is determined.

In some embodiments, as shown in FIG. 8, when the signal is transmitted from the start position A of the transmission opportunity, the start position A of the signal transmission may be used to indicate the start position of the signal transmission in the transmission opportunity. As shown in FIG. 8, when the signal is transmitted from the start position C of the signal transmission, the start position of the signal transmission of the first one of signals corresponding to the signal sequence may be used to indicate the start position of the signal transmission in the transmission opportunity.

In some embodiments, the first configuration information may also be used to configure the time-domain mapping manner of the at least two signals within the transmission opportunity. The time-domain mapping manner of the at least two signals may be configured by the first configuration information or may be configured by the second configuration information.

In some embodiments, the mapping manner includes at least one of: mapping on at least two consecutive first time-domain units; mapping within at least two consecutive second time-domain units; mapping on at least two spaced first time-domain units; mapping within at least two spaced second time-domain units; or mapping within one second time-domain unit.

In some embodiments, the term "spaced" includes at least one of: equally spaced or non-equally spaced. The mapping on the at least two spaced first time-domain units includes at least one of: mapping on at least two equally spaced first time-domain units, or mapping on at least two non-equally spaced first time-domain units. The mapping within the at least two spaced second time-domain units includes at least one of: mapping within at least two equally spaced second time-domain units, or mapping within at least two non-equally spaced second time-domain units.

In some embodiments, the first time-domain unit is configured as a symbol, and the second time-domain unit is configured as a slot. The at least two signals may be mapped on at least two consecutive symbols, or within at least two consecutive slots, or on at least two spaced symbols, or within at least two spaced slots. Or, the at least two signals may be mapped within a slot.

In some embodiments, the case where the time-domain mapping manner of the at least two signals is mapping within at least two consecutive second time-domain units and mapping within at least two spaced second time-domain units is taken as an example. Here, the second time-domain unit is configured as a slot. FIG. 10 illustrates a schematic diagram of time-domain signal mapping provided by an embodiment of the disclosure. As shown in part (1) of FIG. 10, multiple slots corresponding to the same transmission opportunity may be consecutive, wherein 7 slots are configured in the same transmission opportunity, the time interval between adjacent slots is configured as 0 or default, and at least two signals are mapped within consecutive slots. As shown in part (2) of FIG. 10, multiple slots corresponding to the same transmission opportunity may be equally spaced, wherein 4 slots are configured in the same transmission opportunity, the time interval between any two adjacent slots is 1, and at least two signals are mapped within equally spaced slots. As shown in part (3) of FIG. 10, multiple slots corresponding to the same transmission opportunity may be equally spaced, wherein 3 slots are configured in the same transmission opportunity, the time interval between any two adjacent slots is 2, and at least two signals are mapped within equally spaced slots.

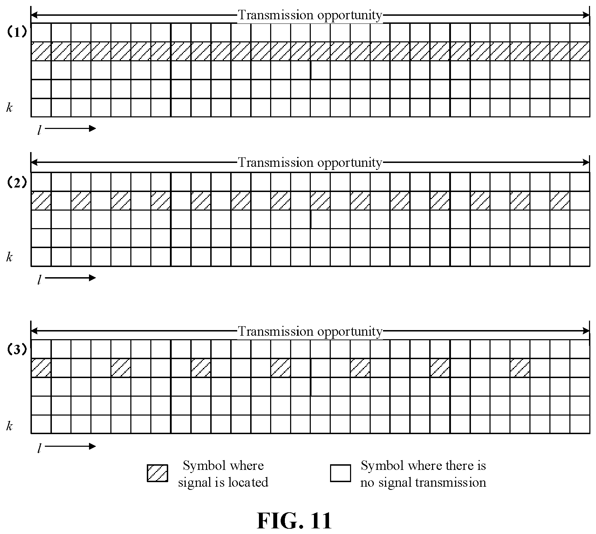

In some embodiments, the case where the time-domain mapping manner of the at least two signals is mapping on at least two consecutive first time-domain units and mapping on at least two spaced first time-domain units is taken as an example. Here, the first time-domain unit is configured as a symbol. FIG. 11 illustrates a schematic diagram of time-domain signal mapping provided by an exemplary embodiment of the disclosure. Within the same transmission opportunity, as shown in part (1) of FIG. 11, at least two signals are mapped on consecutive symbols, and the time interval between adjacent symbols is configured as 0 or default. As shown in part (2) in FIG. 11, at least two signals are mapped on equally spaced symbols with a time interval of 1 between any two adjacent symbols, and as shown in part (3) in FIG. 11, at least two signals are mapped on equally spaced symbols with a time interval of 3 between any two adjacent symbols.

In some embodiments, one slot includes at least two symbols. When the same transmission opportunity is within one slot, at least two symbols may be consecutive or spaced apart within one slot. Then, within one slot, the at least two signals may be mapped on at least two consecutive symbols, or on at least two spaced symbols. When the same transmission opportunity is within multiple spaced slots, at least two symbols may be consecutive or spaced apart within any one of the multiple spaced slots. Then, within any one of the multiple spaced slots, the at least two signals may be mapped on at least two consecutive symbols, or on at least two spaced symbols.

In some embodiments, mapping within one second time-domain unit includes at least one of: mapping on at least two consecutive first time-domain units within one second time-domain unit, or mapping on at least two spaced first time-domain units within one second time-domain unit.

In some embodiments, mapping within at least two spaced second time-domain units includes at least one of: mapping on at least two consecutive first time-domain units within any one of the at least two spaced second time-domain units; or mapping on at least two spaced first time-domain units within any one of the at least two spaced second time-domain units.

In some embodiments, the first time-domain unit is configured as a symbol, and the second time-domain unit is configured as a slot. Then, the at least two signals may be mapped on at least two consecutive symbols within any one of spaced slots. For example, the time-domain mapping manner of the at least two signals is a combination of that shown in part (2) of FIG. 10 and that shown in part (1) of FIG. 11. Or, the time-domain mapping manner of the at least two signals is a combination of that shown in part (3) of FIG. 10 and that shown in part (1) of FIG. 11. Or, the at least two signals may be mapped on at least two spaced symbols within any one of spaced slots. For example, the time-domain mapping manner of the at least two signals is a combination of that shown in part (2) of FIG. 10 and that shown in part (2) of FIG. 11. Or, the time-domain mapping manner of the at least two signals is a combination of that shown in part (2) of FIG. 10 and that shown in part (3) of FIG. 11. Or, the time-domain mapping manner of the at least two signals is a combination of that shown in part (3) of FIG. 10 and that shown in part (2) of FIG. 11. Or, the time-domain mapping manner of the at least two signals is a combination of that shown in part (3) of FIG. 10 and that shown in part (3) of FIG. 11.

In some embodiments, the first configuration information may also be used to configure the frequency-domain mapping manner of the at least two signals within the transmission opportunity. The frequency-domain mapping manner of the at least two signals may be configured by the first configuration information or may be configured by the third configuration information.

In some embodiments, the frequency-domain mapping manner of the at least two signals includes at least one of: mapping on consecutive frequency-domain resource units, or mapping on spaced frequency-domain resource units.

In some embodiments, the frequency-domain resource unit includes at least one of: subcarrier, Resource Block (RB), or Resource Element (RE).

Optionally, within the same transmission opportunity, at least two signals may be mapped on consecutive subcarriers, or on consecutive resource blocks, or on consecutive resource elements. The at least two signals may also be mapped on spaced subcarriers, or on spaced resource blocks, or on spaced resource elements. Herein, the term "spaced" includes at least one of: equally spaced or non-equally spaced.

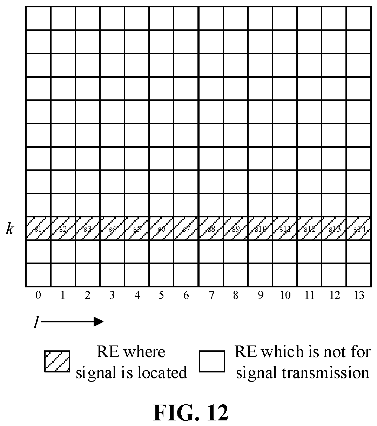

In some embodiments, a set of time-frequency resources within the same transmission opportunity is within one slot. FIG. 12 illustrates a schematic diagram of consecutive signal mapping within one slot provided by an exemplary embodiment of the disclosure. Here, k is an index of a subcarrier where the signal is located, and the signals are sequentially mapped on consecutive resource elements of the same subcarrier across different symbols. Starting from l =0, the signal 1 (i.e., s1) corresponding to the signal sequence is mapped to the index (k, l =0) of the resource element, the signal 2 (i.e., s2) corresponding to the signal sequence is mapped to the index (k, l =1) of the resource element, the signal 3 (i.e., s1) corresponding to the signal sequence is mapped to the index (k, l =2) of the resource element, and so on, and the signal 14 (i.e., s14) corresponding to the signal sequence is mapped to the index (k, l =13) of the resource element. The signals corresponding to the signal sequence are mapped one by one on a set of time-frequency resources.

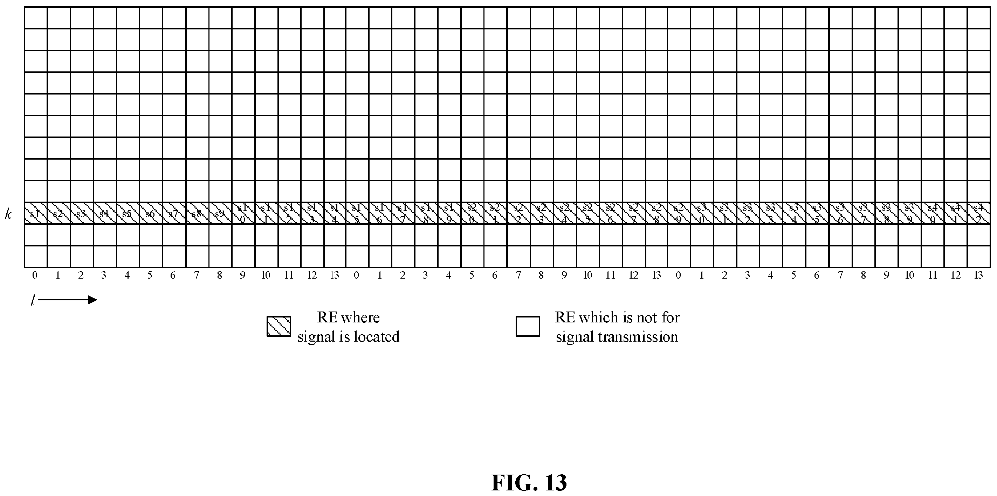

In some embodiments, a set of time-frequency resources within the same transmission opportunity is within multiple consecutive slots. The signals corresponding to the signal sequence are mapped in the order of slots. FIG. 13 illustrates a schematic diagram of consecutive signal mapping within multiple slots provided by an exemplary embodiment of the disclosure. Here, k is an index of a subcarrier where the signal is located. The signals are mapped on consecutive symbols within any one of multiple slots. Each slot includes 14 symbols, then the signal 1 (i.e., s1) to the signal 14 (i.e., s14) corresponding to the signal sequence are mapped respectively to indices (k, l =0) to (k, l =13) of the resource elements in slot 1; the signal 15 (i.e., s15) to the signal 28 (i.e., s28) corresponding to the signal sequence are mapped respectively to indices (k, l =0) to (k, l =13) of the resource elements in slot 2; and the signal 29 (i.e., s29) to the signal 42 (i.e., s42) corresponding to the signal sequence are mapped respectively to indices (k, l =0) to (k, l =13) of the resource elements in slot 3.

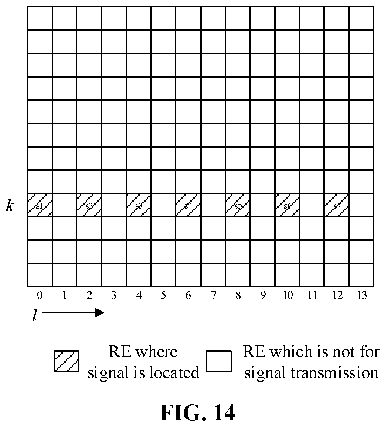

In some embodiments, a set of time-frequency resources within the same transmission opportunity is within one slot. FIG. 14 illustrates a schematic diagram of spaced signal mapping within one slot provided by an exemplary embodiment of the disclosure. Here, k is an index of a subcarrier where the signal is located, symbols are equally spaced and the time interval is 1, and the signals are sequentially mapped on resource elements with the time interval of 1 of the same subcarrier across different symbols. Starting from l =0, the signal 1 (i.e., s1) corresponding to the signal sequence is mapped to the index (k, l =0) of the resource element, the signal 2 (i.e., s2) corresponding to the signal sequence is mapped to the index (k, l =2) of the resource element, the signal 3 (i.e., s3) corresponding to the signal sequence is mapped to the index (k, l =4) of the resource element, and so on, and the signal 7 (i.e., s7) corresponding to the signal sequence is mapped to the index (k, l =12) of the resource element. The signals corresponding to the signal sequence are mapped one by one on a set of time-frequency resources.

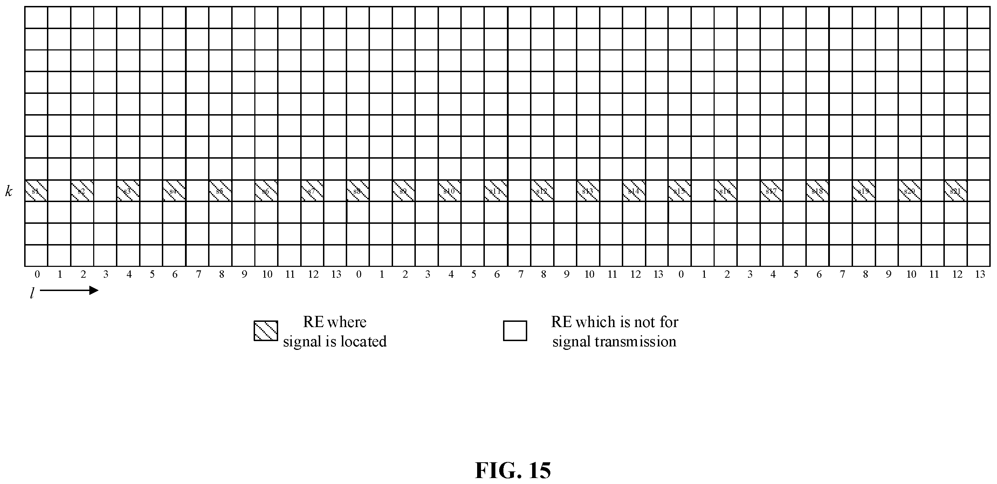

In some embodiments, a set of time-frequency resources within the same transmission opportunity is within multiple consecutive slots, and signals corresponding to the signal sequence are mapped in the order of slots. FIG. 15 illustrates a schematic diagram of spaced signal mapping within multiple slots provided by an exemplary embodiment of the disclosure. Here, k is an index of a subcarrier where the signal is located. The signals are mapped on spaced symbols within any one of multiple slots, the symbols being equally spaced and the time interval being 1. Each slot includes 14 symbols, then the signal 1 (i.e., s1) to the signal 7 (i.e., s7) corresponding to the signal sequence are mapped respectively to indices (k, l =0), (k, l =2), (k, l =4), ... , (k, l =12) of resource elements in slot 1; the signal 8 (i.e., s8) to the signal 14 (i.e., s14) corresponding to the signal sequence are mapped respectively to indices (k, l =0), (k, l =2), (k, l =4), ... , (k, l =12) of resource elements in slot 2; and the signal 15 (i.e., s15) to the signal 21 (i.e., s21) corresponding to the signal sequence are mapped respectively to indices (k, l =0), (k, l =2), (k, l =4), ... , (k, l =12) of resource elements in slot 3.

### 3.2 Same time window

In some embodiments, a set of time-frequency resources are time-frequency resources within a same time window.

In some embodiments, the signal sending end device sends at least two signals within the same time window, and the signal receiving end device receives the at least two signals within the same time window. Herein, the at least two signals occupy at least two time-frequency resources in a set of time-frequency resources, the at least two time-frequency resources correspond to different time-domain positions, and the at least two signals are generated based on a same signal sequence.

In some embodiments, within a same time window, the set of time-frequency resources are consecutive in the time domain or spaced in the time domain.

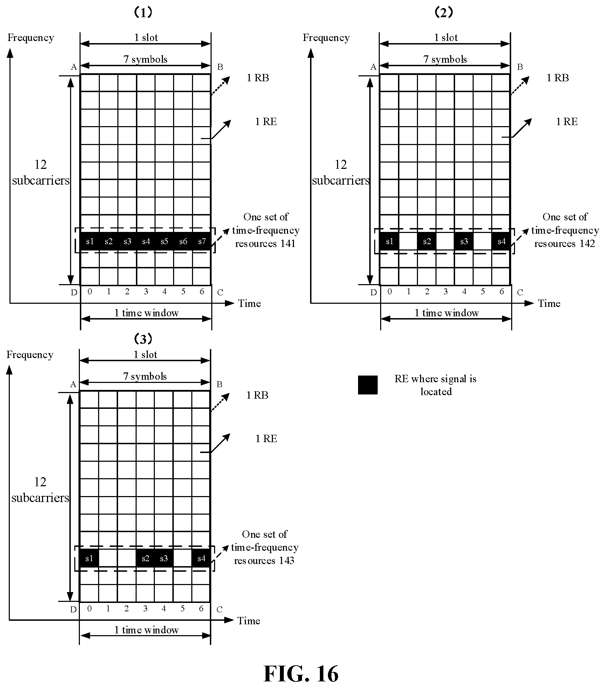

In some embodiments, FIG. 16 illustrates a schematic diagram of a time window provided by an exemplary embodiment of the disclosure. The horizontal axis in FIG. 16 represents time (time domain), and the vertical axis represents frequency (frequency domain). A physical resource corresponding to 1 subcarrier in the frequency domain and 1 Symbol in the time domain is called 1 Resource Element (RE). The physical resources corresponding to 12 consecutive subcarriers in the frequency domain and 1 slot in the time domain are called 1 Resource Block (RB), and 1 slot includes 7 symbols. The set of time-frequency resources 141 shown in part (1) of FIG. 16 are time-frequency resources consecutive in the time domain within the same time window, the set of time-frequency resources 142 shown in part (2) of FIG. 16 are time-frequency resources equally spaced in the time domain within the same time window, and the set of time-frequency resources 143 shown in part (3) of FIG. 16 are time-frequency resources non-equally spaced in the time domain within the same time window.

In some embodiments, the time window is periodic.

In some embodiments, a period of the time window is configured by the first configuration information, and the time window may occur within the period. Optionally, a length of the time window may be equal to a length of the period. Alternatively, the length of the time window may be less than the length of the period. Herein, the length refers to a time length or occupied time length. The time length may be expressed in absolute time or a number of time-domain units, and the time-domain units may be symbols or slots. When the time-domain units are symbols, the time-domain units may also be referred to as time units. The length of the time window refers to a time interval between a start time and an end time of the time window. The length of the period refers to a time interval between a start time and an end time of the period.

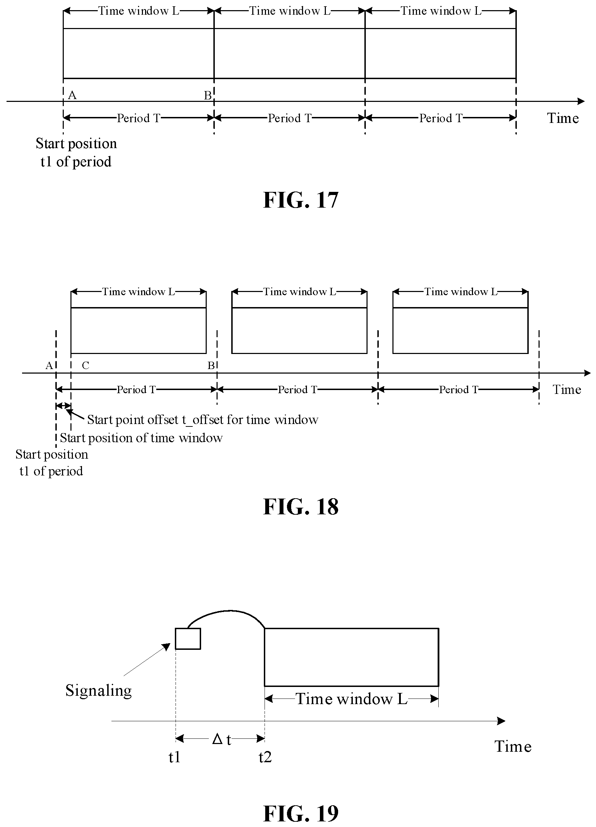

In some embodiments, FIG. 17 illustrates a schematic diagram of a time window provided by an exemplary embodiment of the disclosure. The horizontal axis in FIG. 17 represents time. A time interval between a time point A and a time point B is a period T in which a time window can occur. The length of the time window in FIG. 17 is the same as the length of the period, and the signal may be transmitted from a start position A of the time window, i.e. the signal is transmitted from a start position t1 of the period.

In some embodiments, FIG. 18 illustrates a schematic diagram of a time window provided by an exemplary embodiment of the disclosure. The horizontal axis in FIG. 18 represents time. Herein, a time interval between the time point A and the time point B is a period T in which a time window can occur, and the length of the time window is less than the length of the period. The signal is transmitted from a start position C of the time window, and there is a time window start offset t_offset between the start position C of the time window and the start position A of the period.

In some embodiments, the time window is signaling triggered.

In some embodiments, the signaling may also be referred to as at least one of indication signaling, trigger signaling, or time window trigger signaling.

In some embodiments, the types of signaling include at least one of: RRC signaling; NAS signaling; media access control signaling; or DCI.

It is to be noted that the signaling for triggering the time window and the signaling for triggering the transmission opportunity may be of the same type or different types.

In some embodiments, the signal sending end device or the signal receiving end device receives signaling for triggering a time window.

In some embodiments, FIG. 19 illustrates a schematic diagram of a time window provided by an exemplary embodiment of the disclosure. Herein, the signal sending end device or the signal receiving end device receives, at time t1, signaling for triggering a time window. The signaling may indicate that the start position of the time window is time t2, the length of the time window is L, and the transmission duration of the signal is L. Alternatively, the signaling may indicate that the start position of the time window is a position corresponding to the time Δ t after the time t1, that is, the start position of the time window is t1+Δ t, the length of the time window is L, and the transmission duration of the signal is L. Optionally, t2 and Δ T may be indicated in the signaling, or may be agreed in a protocol or pre-configured. L may be indicated in the signaling, may be agreed in a protocol or pre-configured, or may be determined according to a number of signals corresponding to the signal sequence and the time-domain mapping manner of at least two signals.

In some embodiments, the time window configured by the first configuration information.

In some embodiments, the first configuration information is used for configuring at least one of: a length of the time window; a period of the time window; a time window start offset; a start position of a signal transmission within the time window; a time-domain mapping manner of the at least two signals; or a frequency-domain mapping manner of the at least two signals.

In some embodiments, the length of the time window refers to a duration corresponding to the time window.

In some embodiments, the length of the time window is related to at least one of: a number of signals corresponding to the signal sequence; a transmission time length of the signal sequence; a time interval between a start time of a first one of signals corresponding to the signal sequence and a start time of a last one of the signals; a time interval between the start time of the first one of signals corresponding to the signal sequence and an end time of the last one of the signals; a length of a time-domain unit for mapping the signal sequence; a number of time-domain units for mapping the signal sequence; or a time interval between the time-domain units for mapping the signal sequence, wherein each time-domain unit is used for mapping at least one signal.

In some embodiments, the length of the time window is related to the number of signals corresponding to the signal sequence. Herein, the number of signals corresponding to the signal sequence may be determined based on the length of the time window, or the length of the time window may be determined based on the number of signals corresponding to the signal sequence. Optionally, the length of the time window is positively correlated with the number of signals corresponding to the signal sequence, and the more the number of signals corresponding to the signal sequence, the longer the length of the time window. For example, if the number of signals corresponding to the signal sequence is 4, where each signal occupies 1 symbol, then a set of time-frequency resources needs to include at least 4 symbols, and the length of the time window is at least 4 symbols.

In some embodiments, the length of the time window is related to the transmission time length of the signal sequence. Herein, the transmission time length of the signal sequence may be determined according to the length of the time window, or the length of the time window may be determined according to the transmission time length of the signal sequence. Optionally, the length of the time window is greater than or equal to the transmission time length of the signal sequence. For example, if the transmission time of the signal sequence is 10 milliseconds, the length of the time window is greater than or equal to 10 milliseconds.

In some embodiments, the length of the time window is related to the time interval between a start time of a first one of signals corresponding to the signal sequence and a start time of a last one of the signals. Herein, the time interval between a start time of a first one of signals corresponding to the signal sequence and a start time of a last one of the signals may be determined according to the length of the time window, or the length of the time window may be determined according to the time interval between a start time of a first one of signals corresponding to the signal sequence and a start time of a last one of the signals. Optionally, the length of the time window is greater than the time interval between a start time of a first one of signals corresponding to the signal sequence and a start time of a last one of the signals. Optionally, the length of the time window is equal to a sum of the time interval and a signal transmission duration of the last signal. Herein, the signal transmission duration of the last signal may be pre-configured, or agreed upon in the protocol.

In some embodiments, the length of the time window is related to the time interval between the start time of the first one of signals corresponding to the signal sequence and an end time of the last one of the signals. Herein, the time interval between the start time of the first one of signals corresponding to the signal sequence and an end time of the last one of the signals may be determined according to the length of the time window, or the length of the time window may be determined according to the time interval between the start time of the first one of signals corresponding to the signal sequence and an end time of the last one of the signals. Optionally, the length of the time window is greater than or equal to the time interval between the start time of the first one of signals corresponding to the signal sequence and an end time of the last one of the signals. For example, if the time interval between the start time of the first one of signals corresponding to the signal sequence and an end time of the last one of the signals is 10 milliseconds, the length of the time window is greater than or equal to 10 milliseconds.

In some embodiments, the time interval is represented by at least one of: N symbols; N slots; N frames; N milliseconds (ms); or N seconds (s), wherein N is greater than or equal to 0, or N is greater than or equal to 1.

In some embodiments, the length of the time window is related to the length of the time-domain unit for mapping the signal sequence. Herein, the length of the time-domain unit for mapping the signal sequence may be determined according to the length of the time window, or the length of the time window may be determined according to the length of the time-domain unit for mapping the signal sequence. Optionally, the length of the time window is greater than or equal to a total length of the time-domain units for mapping the signal sequence, where the total length means a sum of lengths of respective time-domain units used for mapping the signal sequence.

In some embodiments, the time-domain unit is at least one time unit for mapping a signal sequence. Here, time units are the basic units of signal mapping, and each time unit is used for mapping one signal. For example, the time unit is configured as a symbol. Since the time-domain unit is at least one time unit, each time-domain unit is used for mapping at least one signal.

In some embodiments, the time-domain unit is at least one of a first time-domain unit or a second time-domain unit, each of the second time-domain units including at least two first time-domain units, and each of the first time-domain units being used for mapping one signal. Optionally, the first time-domain unit is configured as a symbol, and the second time-domain unit is configured as a slot.

In some embodiments, the length of the time-domain unit used for mapping the signal sequence includes at least one of: a length of the first time-domain unit used for mapping the signal sequence; or a length of the second time-domain unit used for mapping the signal sequence.

In some embodiments, the length of the time window is greater than or equal to the total length of the time-domain units used for mapping the signal sequence. The total length of the time-domain units used for mapping the signal sequence refers to a sum of lengths of respective first time-domain units used for mapping the signal sequence, or a sum of lengths of respective second time-domain units used for mapping the signal sequence.

In some embodiments, the length of the time window is related to the number of time-domain units for mapping the signal sequence. Herein, the number of time-domain units for mapping the signal sequence may be determined according to the length of the time window, or the length of the time window may be determined according to the number of time-domain units for mapping the signal sequence. Optionally, the length of the time window is greater than or equal to a total length of the time-domain units used for mapping the signal sequence, the total length being equal to the length of a single time-domain unit multiplied by the number of time-domain units.

In some embodiments, the length of the time-domain unit used for mapping the signal sequence includes at least one of: a number of first time-domain units used for mapping the signal sequence; or a number of second time-domain units used for mapping the signal sequence.

In some embodiments, the length of the time window is greater than or equal to the total length of the time-domain units used for mapping the signal sequence. Herein, the total length of the time-domain units used for mapping the signal sequence refers to the length of a single first time-domain unit used for mapping the signal sequence multiplied by the number of first time-domain units, or the length of a single second time-domain unit used for mapping the signal sequence multiplied by the number of second time-domain units.

In some embodiments, the length of the time window is related to the time interval between the time-domain units for mapping the signal sequence Here, the time interval between the time-domain units for mapping the signal sequence may be determined according to the length of the time window, or the length of the time window may be determined according to the time interval between the time-domain units for mapping the signal sequence. Optionally, the length of the time window is greater than or equal to the sum of a total time interval corresponding to the time-domain units and a total length corresponding to the time-domain units. Herein, the total time interval refers to a sum of respective time intervals between the time-domain units used for mapping the signal sequence, and the total length refers to a sum of lengths of the time-domain units used for mapping the signal sequence.

In some embodiments, the time interval between time-domain units for mapping the signal sequence includes at least one of: a time interval between the first time-domain units for mapping the signal sequence; or a time interval between the second time-domain units for mapping the signal sequence.

In some embodiments, the length of the time window is greater than or equal to a sum of a total time interval corresponding to the first time-domain units and a total length corresponding to the first time-domain units. Herein, the total time interval refers to a sum of respective time intervals between the first time-domain units used for mapping the signal sequence, and the total length refers to a sum of lengths of the first time-domain units used for mapping the signal sequence. Or, the length of the time window is greater than or equal to the sum of a total time interval corresponding to the second time-domain units and a total length corresponding to the second time-domain units. Herein, the total time interval refers to a sum of respective time intervals between the second time-domain units for mapping the signal sequence, and the total length refers to a sum of lengths of the second time-domain units for mapping the signal sequence.

In some embodiments, the period is configured by the first configuration information, and the time window may occur within the period.

In some embodiments, the length of the time window is equal to the length of the period, then the start position of the time window is the same as the start position of the period. Or, if the length of the time window is less than the length of the period, the start position of the time window is later than the start position of the period. A time offset between the start position of the time window and the start position of the period may be referred to as the time window start offset.

In some embodiments, the length of the time window may not be configured if the length of the time window is equal to the length of the period.

In some embodiments, the first configuration information may also be used to configure at least one of: a number of periods of time windows, or a number of times of time windows. When the number of periods of the time windows or the number of times of the time windows is not configured in the first configuration information, the number of periods of the time windows and the number of times of the time windows may be extended indefinitely in time until the signal sending end device or the signal receiving end device receives signaling and terminates or reconfigures the period or the time window.

In some embodiments, the period of the time window is related to at least one of: a transmission period of the signal sequence; or a time interval between a start time of an i-th signal sequence and a start time of an (i+l)-th signal sequence, where i is greater than or equal to 0.

In some embodiments, the transmission period of the signal sequence includes a time interval between the i-th signal sequence and the (i+1)-th signal sequence, where i is greater than or equal to 0. For example, the transmission period of the signal sequence may be a time interval between a start position of a signal transmission of a first one of signals in the i-th signal sequence and a start position of a signal transmission of a first one of signals corresponding to the (i+1)-th signal sequence. The period of the time window is related to the transmission period of the signal sequence. Herein, the transmission period of the signal sequence may be determined according to the period of the time window, or the period of the time window may be determined according to the transmission period of the signal sequence. Optionally, the period of the time window is greater than or equal to the transmission period of the signal sequence.

In some embodiments, the start time of the i-th signal sequence is a start position of a signal transmission of a first one of signals corresponding to the i-th signal sequence, where i is greater than or equal to 0. The start time of the (i+1)-th signal sequence is a start position of a signal transmission of a first one of signals corresponding to the (i+1)-th signal sequence. The period of the time window is related to the time interval between the start time of the i-th signal sequence and the start time of the (i+1)-th signal sequence. Herein, the time interval between the start time of the i-th signal sequence and the start time of the (i+1)-th signal sequence may be determined according to the period of the time window, or the period of the time window may be determined according to the time interval between the start time of the i-th signal sequence and the start time of the (i+1)-th signal sequence. Optionally, the period of the time window is greater than or equal to the time interval between the start time of the i-th signal sequence and the start time of the (i+l)-th signal sequence.

In some embodiments, as shown in FIG. 17, the length between the time point A and the time point B is the transmission period of the signal sequence, and the period of the time window may be indicated by the transmission period of the signal sequence. Taking i =1 as an example, the start time of the first signal sequence is a time point A, the end time of the first signal sequence is a time point B, and the start time of the second signal sequence is the time point B, then the period of the time window may be indicated by a time interval between the start time of the first signal sequence and the start time of the second signal sequence.

In some embodiments, the start position of the signal transmission within the time window refers to a start position of a signal transmission of the first one of signals corresponding to the signal sequence. The start position of the signal transmission within the time window may also be referred to as a signal transmission start or a signal transmission starting time point.

In some embodiments, the start position of the signal transmission within the time window may be the same as the start position of the time window. Herein, when the length of the time window is equal to the length of the period, the start position of the signal transmission within the time window is the start position of the period. Or, the start position of the signal transmission within the time window may be later than the start position of the time window. In the embodiment, the start position of the signal transmission within the time window may be the start position of the time window, and the end position of the signal transmission within the time window may be earlier than the end position of the time window. Or, the start position of the signal transmission within the time window may be the start position of the time window, and the end position of the signal transmission within the time window may be the end position of the time window. Or, the start position of the signal transmission within the time window may be later than the start position of the time window, and the end position of the signal transmission within the time window may be the end position of the time window. Or, the start position of the signal transmission within the time window may be later than the start position of the time window, and the end position of the signal transmission within the time window may be earlier than the end position of the time window.

In the embodiment, when the set of time-frequency resources are time-frequency resources within the same time window, the start position of the signal transmission within the time window is equal to or later than the start position of the time window, and the end position of the signal transmission within the time window is earlier than or equal to the end position of the time window, then the length of the time window is greater than or equal to the transmission time length of the signal sequence, i.e., it needs to determine the time window first and then determine the set of time-frequency resources.

In some embodiments, as shown in FIG. 17, when the signal is transmitted from the start position A of the time window, the start position of the signal transmission may be used to indicate the start position of the signal transmission in the time window. As shown in FIG. 18, when the signal is transmitted from the start position C of the time window, the start position of the signal transmission of the first one of signals corresponding to the signal sequence may be used to indicate the start position of the signal transmission in the time window.

In some embodiments, the first configuration information may also be used to configure the time-domain mapping manner of the at least two signals within the time window. The time-domain mapping manner of the at least two signals may be configured by the first configuration information or may be configured by the second configuration information.

In some embodiments, the mapping manner includes at least one of: mapping on at least two consecutive first time-domain units; mapping within at least two consecutive second time-domain units; mapping on at least two spaced first time-domain units; mapping within at least two spaced second time-domain units; or mapping within one second time-domain unit.

In some embodiments, the term "spaced" includes at least one of: equally spaced or non-equally spaced. The mapping on the at least two spaced first time-domain units includes at least one of: mapping on at least two equally spaced first time-domain units, or mapping on at least two non-equally spaced first time-domain units. The mapping within the at least two spaced second time-domain units includes at least one of: mapping within at least two equally spaced second time-domain units, or mapping within at least two non-equally spaced second time-domain units.

In some embodiments, the first time-domain unit is configured as a symbol, and the second time-domain unit is configured as a slot. The at least two signals may be mapped on at least two consecutive symbols, or within at least two consecutive slots, or on at least two spaced symbols, or within at least two spaced slots. Or, the at least two signals may be mapped within a slot.

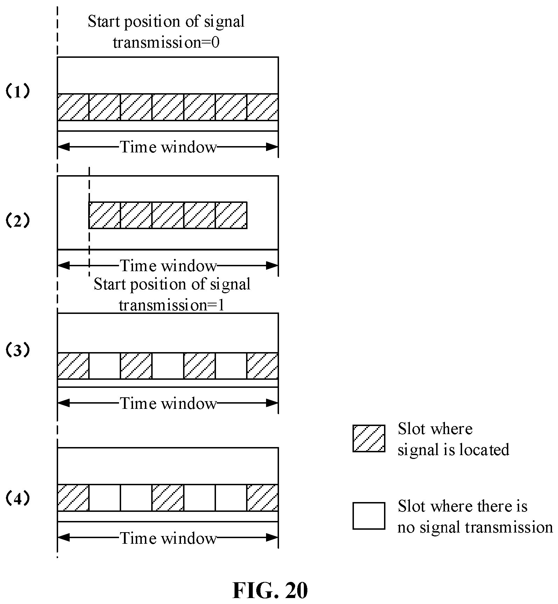

In some embodiments, the case where the time-domain mapping manner of the at least two signals is mapping within at least two consecutive second time-domain units and mapping within at least two spaced second time-domain units is taken as an example. Here, the second time-domain unit is configured as a slot. FIG. 20 illustrates a schematic diagram of time-domain signal mapping provided by an embodiment of the disclosure. As shown in part (1) of FIG. 20, multiple slots corresponding to the same time window may be consecutive, wherein 7 slots are configured in the same time window, the time interval between adjacent slots is configured as 0 or default, at least two signals are mapped within consecutive slots, and a start position of signal transmission of a first one of at least two signals may be 0. As shown in part (2) of FIG. 20, multiple slots corresponding to the same time window may be consecutive, wherein 5 slots are configured in the same time window, the time interval between adjacent slots is configured as 0 or default, at least two signals are mapped within consecutive slots, and a start position of signal transmission of a first one of at least two signals may be 1. As shown in part (3) of FIG. 20, multiple slots corresponding to the same time window may be equally spaced, wherein 4 slots are configured in the same time window, the time interval between any two adjacent slots is 1, and at least two signals are mapped within equally spaced slots. As shown in part (4) of FIG. 20, multiple slots corresponding to the same time window may be equally spaced, wherein 3 slots are configured in the same time window, the time interval between any two adjacent slots is 2, and at least two signals are mapped within equally spaced slots.

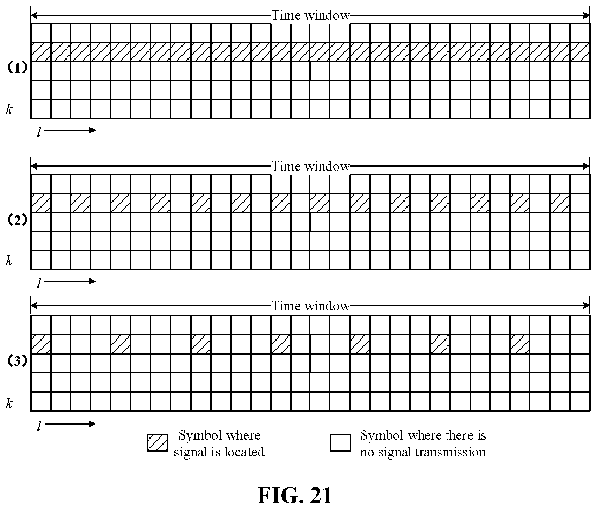

In some embodiments, the case where the time-domain mapping manner of the at least two signals is mapping within at least two consecutive first time-domain units and mapping within at least two spaced first time-domain units is taken as an example. Here, the first time-domain unit is configured as a symbol. FIG. 21 illustrates a schematic diagram of time-domain signal mapping provided by an exemplary embodiment of the disclosure. Within the same time window, as shown in part (1) of FIG. 21, at least two signals are mapped on consecutive symbols, and the time interval between adjacent symbols is configured as 0 or default. As shown in part (2) in FIG. 21, at least two signals are mapped on equally spaced symbols with a time interval of 1 between any two adjacent symbols, and as shown in part (3) in FIG. 21, at least two signals are mapped on equally spaced symbols with a time interval of 3 between any two adjacent symbols.

In some embodiments, one slot includes at least two symbols. When the same time window is within one slot, at least two symbols may be consecutive or spaced apart within one slot. Then, within one slot, the at least two signals may be mapped on at least two consecutive symbols, or on at least two spaced symbols. When the same time window is within multiple spaced slots, at least two symbols may be consecutive or spaced apart within any one of the multiple spaced slots. Then, within any one of the multiple spaced slots, the at least two signals may be mapped on at least two consecutive symbols, or on at least two spaced symbols.

In some embodiments, mapping within one second time-domain unit includes at least one of: mapping on at least two consecutive first time-domain units within one second time-domain unit, or mapping on at least two spaced first time-domain units within one second time-domain unit.

In some embodiments, mapping within at least two spaced second time-domain units includes at least one of: mapping on at least two consecutive first time-domain units within any one of the at least two spaced second time-domain units; or mapping on at least two spaced first time-domain units within any one of the at least two spaced second time-domain units.

In some embodiments, the first time-domain unit is configured as a symbol, and the second time-domain unit is configured as a slot. Then, the at least two signals may be mapped on at least two consecutive symbols within any one of spaced slots. For example, the time-domain mapping manner of the at least two signals is a combination of that shown in part (3) of FIG. 20 and that shown in part (1) of FIG. 21. Or, the time-domain mapping manner of the at least two signals is a combination of that shown in part (4) of FIG. 20 and that shown in part (1) of FIG. 21. Or, the at least two signals may be mapped on at least two spaced symbols within any one of spaced slots. For example, the time-domain mapping manner of the at least two signals is a combination of that shown in part (3) of FIG. 20 and that shown in part (2) of FIG. 21. Or, the time-domain mapping manner of the at least two signals is a combination of that shown in part (3) of FIG. 20 and that shown in part (3) of FIG. 21. Or, the time-domain mapping manner of the at least two signals is a combination of that shown in part (4) of FIG. 20 and that shown in part (2) of FIG. 21. Or, the time-domain mapping manner of the at least two signals is a combination of that shown in part (4) of FIG. 20 and that shown in part (3) of FIG. 21.

In some embodiments, the first configuration information may also be used to configure the frequency-domain mapping manner of the at least two signals within the time window. The frequency-domain mapping manner of the at least two signals may be configured by the first configuration information or may be configured by the third configuration information.

In some embodiments, the frequency-domain mapping manner of the at least two signals includes at least one of: mapping on consecutive frequency-domain resource units, or mapping on spaced frequency-domain resource units.

In some embodiments, the frequency-domain resource unit includes at least one of: subcarrier, Resource Block (RB), or Resource Element (RE).

Optionally, within the same time window, at least two signals may be mapped on consecutive subcarriers, or on consecutive resource blocks, or on consecutive resource elements. The at least two signals may also be mapped on spaced subcarriers, or on spaced resource blocks, or on spaced resource elements. Herein, the term "spaced" includes at least one of: equally spaced or non-equally spaced.

In some embodiments, a set of time-frequency resources within the same time window is within one slot. FIG. 13 illustrates a schematic diagram of consecutive signal mapping within one slot provided by an exemplary embodiment of the disclosure. Here, k is an index of a subcarrier where the signal is located, and the signals are sequentially mapped on consecutive resource elements of the same subcarrier across different symbols. Starting from l =0, the signal 1 (i.e., s1) corresponding to the signal sequence is mapped to the index (k, l =0) of the resource element, the signal 2 (i.e., s2) corresponding to the signal sequence is mapped to the index (k, l =1) of the resource element, the signal 3 (i.e., s1) corresponding to the signal sequence is mapped to the index (k, l =2) of the resource element, and so on, and the signal 14 (i.e., s14) corresponding to the signal sequence is mapped to the index (k, l =13) of the resource element. The signals corresponding to the signal sequence are mapped one by one on a set of time-frequency resources.

In some embodiments, a set of time-frequency resources within the same time window is within multiple consecutive slots. The signals corresponding to the signal sequence are mapped in the order of slots. For the schematic diagram of consecutive mapping of signals in multiple slots in the embodiment, reference may be made to FIG. 13, which will not be described again here.

In some embodiments, a set of time-frequency resources within the same time window is within one slot. For the schematic diagram of spaced mapping of signals in one slot in the embodiment, reference may be made to FIG. 14, which will not be described again here.

In some embodiments, a set of time-frequency resources within the same time window is within multiple consecutive slots, and signals corresponding to the signal sequence are mapped in the order of slots. For the schematic diagram of spaced mapping of signals in multiple slots in the embodiment, reference may be made to FIG. 15, which will not be described again here.

### 3.3 Time-domain related configuration

In some embodiments, the signal sending end device sends at least two signals, and the signal receiving end device receives the at least two signals. Herein, the at least two signals occupy at least two time-frequency resources in a set of time-frequency resources, and the at least two time-frequency resources correspond to different time-domain positions.

In some embodiments, time-domain positions corresponding to a set of time-frequency resources are configured by second configuration information.

In some embodiments, the second configuration information is used for configuring at least one of: a number of time-domain units corresponding to the set of time-frequency resources; a length of the time-domain units corresponding to the set of time-frequency resources; a time interval between the time-domain units corresponding to the set of time-frequency resources; a time-domain mapping manner of the at least two signals, where each time-domain unit is used for mapping at least one signal.

In some embodiments, the number of time-domain units corresponding to the set of time-frequency resources is related to at least one of:
a length of the signal sequence, or a number of signals corresponding to the signal sequence.

In some embodiments, the time-domain unit is at least one time unit for mapping a signal sequence. Here, time units are the basic units of signal mapping, and each time unit is used for mapping one signal. For example, the time unit is configured as a symbol. Since the time-domain unit is at least one time unit, each time-domain unit is used for mapping at least one signal.

In some embodiments, the time-domain unit is at least one of a first time-domain unit or a second time-domain unit, each of the second time-domain units including at least two first time-domain units, and each of the first time-domain units being used for mapping one signal.

In some embodiments, the number of time-domain units corresponding to the set of time-frequency resources includes at least one of: a number of first time-domain units corresponding to the set of time-frequency resources, or a number of second time-domain units corresponding to the set of time-frequency resources.

Optionally, the first time-domain unit is configured as a symbol, and the second time-domain unit is configured as a slot. Then, the number of first time-domain units corresponding to the set of time-frequency resources refers to a number of symbols corresponding to the set of time-frequency resources, and the set of time-frequency resources corresponds to at least two symbols. Then, the number of second time-domain units corresponding to the set of time-frequency resources refers to a number of slots corresponding to the set of time-frequency resources, and the set of time-frequency resources corresponds to at least one slot.

In some embodiments, the length of time-domain units corresponding to the set of time-frequency resources includes at least one of: a length of first time-domain units corresponding to the set of time-frequency resources, or a length of second time-domain units corresponding to the set of time-frequency resources.

Optionally, the first time-domain unit is configured as a symbol, and the second time-domain unit is configured as a slot. Then, the length of first time-domain units corresponding to the set of time-frequency resources refers to a length of symbols corresponding to the set of time-frequency resources. Then, the length of the second time-domain units corresponding to the set of time-frequency resources refers to a length of slots corresponding to the set of time-frequency resources, and one slot includes at least two symbols.

In some embodiments, the time interval between time-domain units corresponding to the set of time-frequency resources includes at least one of: a time interval between first time-domain units corresponding to the set of time-frequency resources, or a time interval between second time-domain units corresponding to the set of time-frequency resources.

Optionally, the first time-domain unit is configured as a symbol, and the second time-domain unit is configured as a slot. Then, the time interval between the first time-domain units corresponding to the set of time-frequency resources refers to a time interval between adjacent symbols corresponding to the set of time-frequency resources. Here, in a case where the set of time-frequency resources is consecutive in the time domain, the time interval between adjacent symbols is configured as 0 or default. In the case where the set of time-frequency resources are equally spaced in the time domain, the time interval between any two adjacent symbols is the same. In a case where the set of time-frequency resources are non-equally spaced in the time domain, there are at least part of adjacent symbols whose time interval is different from a time interval between other adjacent symbols.

Optionally, the first time-domain unit is configured as a symbol, and the second time-domain unit is configured as a slot. Then, the time interval between the second time-domain units corresponding to the set of time-frequency resources refers to a time interval between adjacent slots corresponding to the set of time-frequency resources. Here, the time interval between adjacent slots is configured as 0 or default, or the time interval between any two adjacent slots is the same, or there are at least part of adjacent slots whose time interval is different from a time interval between other adjacent slots.

In some embodiments, the mapping manner includes at least one of: mapping on at least two consecutive first time-domain units; mapping within at least two consecutive second time-domain units; mapping on at least two spaced first time-domain units; mapping within at least two spaced second time-domain units; or mapping within one second time-domain unit.

In some embodiments, the term "spaced" includes at least one of: equally spaced or non-equally spaced. The mapping on the at least two spaced first time-domain units includes at least one of: mapping on at least two equally spaced first time-domain units, or mapping on at least two non-equally spaced first time-domain units. The mapping within the at least two spaced second time-domain units includes at least one of: mapping within at least two equally spaced second time-domain units, or mapping within at least two non-equally spaced second time-domain units.

In some embodiments, the first time-domain unit is configured as a symbol, and the second time-domain unit is configured as a slot. The at least two signals may be mapped on at least two consecutive symbols, or within at least two consecutive slots, or on at least two spaced symbols, or within at least two spaced slots. Or, the at least two signals may be mapped within a slot.

In some embodiments, mapping within one second time-domain unit includes at least one of: mapping on at least two consecutive first time-domain units within one second time-domain unit, or mapping on at least two spaced first time-domain units within one second time-domain unit.

In some embodiments, mapping within at least two spaced second time-domain units includes at least one of: mapping on at least two consecutive first time-domain units within any one of the at least two spaced second time-domain units; or mapping on at least two spaced first time-domain units within any one of the at least two spaced second time-domain units.

It is to be noted that for a specific description of the time-domain mapping manner of the at least two signals in the above-described embodiment, reference may be made to the time-domain mapping manner of the at least two signals described with respect to the first configuration information, which will not be described again here. When the time-domain positions of the time-frequency resource are configured in the above embodiment, the specific content of the second configuration information can be determined according to the actual technical needs. For example, the number, length and time interval of the time-domain units as well as the time-domain mapping manner of at least two signals and the like can be flexibly configured according to the actual technical needs, so as to be suitable for different accuracy requirements of the sensing measurement. Especially in the measurement of velocity and Doppler offset, the number and time interval of the time-domain units will have a direct influence on the measurement accuracy and range of the velocity and the Doppler offset. In the embodiment, by mapping signals at different time-domain positions of a set of time-frequency resources, autocorrelation properties of a signal sequence on each subcarrier can be guaranteed.

### 3.4 Frequency-domain related configuration

In some embodiments, the signal mapping of the present embodiment adopts a time-domain-first principle, and in a set of time-frequency resources within a transmission opportunity or time window, one frequency-domain position is fixed to perform mapping on different time-domain positions, and after the time-domain positions are all occupied, mapping is performed for the next frequency-domain position.

In some embodiments, frequency-domain positions corresponding to a set of time-frequency resources are configured by third configuration information.

In some embodiments, the third configuration information is used for configuring at least one of: a frequency-domain resource unit; a frequency-domain resource start position; a frequency-domain resource range; or a frequency-domain mapping manner of the at least two signals.

In some embodiments, the frequency-domain resource unit includes at least one of: subcarrier, Resource Block (RB), or Resource Element (RE).

In some embodiments, the frequency-domain resource start position is represented by at least one of: an index of a start resource block; an index of a start subcarrier occupied by the signal sequence in the start resource block; or an index of a start resource element occupied by the signal sequence in the start resource block.

In some embodiments, a start resource block (RB0) refers to a resource block corresponding to a frequency-domain resource start position. The resource block includes a plurality of resource elements, and the start resource element is a resource element corresponding to the frequency-domain resource start position in the start resource block. The start subcarrier is a subcarrier corresponding to the frequency-domain resource start position in the start resource block.

In some embodiments, the frequency-domain resource range is determined based on at least one of: a number of subcarriers; a number of resource blocks; or a number of resource elements.

In some embodiments, the frequency-domain mapping manner includes at least one of: mapping on consecutive frequency-domain resource units, or mapping on spaced frequency-domain resource units.

It is to be noted that for a specific description of the frequency-domain mapping manner of the at least two signals in the embodiment, reference may be made to the frequency-domain mapping manner of the at least two signals described with respect to the first configuration information, which will not be described again here. In the above embodiment, when the frequency-domain positions of the time-frequency resource are configured, the number of subcarriers, the number of resource blocks and the number of resource elements can be flexibly configured. When one subcarrier is configured for one signal, resource overheads of the signal can be saved. A plurality of subcarriers or resource blocks are also configured in the frequency-domain positions, thus one measurement result can be obtained for a signal sequence corresponding to each subcarrier, and the accuracy and precision of sensing measurement can be improved by integrating the plurality of measurement results.

It is to be noted that the first configuration information, the second configuration information and the third configuration information may be used independently or in combination, for example, the network device may configure only the first configuration information, only the second configuration information, or only the third configuration information. Or, the first configuration information and the second configuration information are simultaneously configured, or the first configuration information and the third configuration information are simultaneously configured, or the second configuration information and the third configuration information are simultaneously configured, or the first configuration information, the second configuration information and the third configuration information are simultaneously configured.

### 4. Multiple sets of time-frequency resources

In some embodiments, different sets of signals are sent in different sets of time-frequency resources, each set of signals including at least two signals.

In some embodiments, the different sets of time-frequency resources correspond to same time-domain positions and different frequency-domain positions, or the different sets of time-frequency resources correspond to different time-domain positions and same frequency-domain positions, or the different sets of time-frequency resources correspond to different time-domain positions and different frequency-domain positions.

In some embodiments, each of the different sets of time-frequency resources may be consecutive in the time domain, or spaced apart in the time domain. Or, at least part of the different sets of time-frequency resources are consecutive in the time domain, and the other sets of time-frequency resources are spaced in the time domain. Herein, the term "spaced" includes at least one of: equally spaced or non-equally spaced.

For example, taking two sets of time-frequency resources as an example, each of the two sets of time-frequency resources is consecutive in the time domain, or is spaced apart in the time domain; or one set of time-frequency resources is consecutive in the time domain and the other set of time-frequency resources is spaced apart in the time domain.

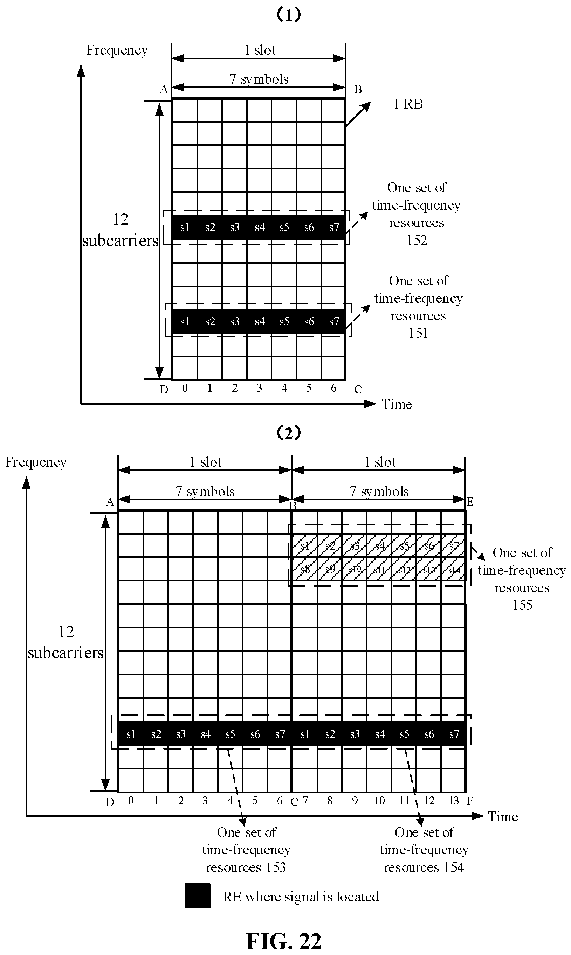

In some embodiments, FIG. 22 illustrates a schematic diagram of different sets of time-frequency resources provided by an exemplary embodiment of the disclosure. The horizontal axis in FIG. 22 represents time (time domain), and the vertical axis represents frequency (frequency domain). A physical resource corresponding to 1 subcarrier in the frequency domain and 1 Symbol in the time domain is called 1 Resource Element (RE). The physical resources corresponding to 12 consecutive subcarriers in the frequency domain and 1 slot in the time domain are called 1 Resource Block (RB), and 1 slot includes 7 symbols. Taking different sets of time-frequency resources being two sets of time-frequency resources as an example, part (1) in FIG. 22 shows a set of time-frequency resources 151 and a set of time-frequency resources 152. The set of time-frequency resources 151 includes 7 time-frequency resources consecutive in the time domain, the set of time-frequency resources 152 includes 7 time-frequency resources consecutive in the time domain, and the set of time-frequency resources 151 and the set of time-frequency resources 152 correspond to the same time-domain positions and different frequency-domain positions. Part (2) of FIG. 22 shows a set of time-frequency resources 153 and a set of time-frequency resources 154. The set of time-frequency resources 153 includes 7 time-frequency resources consecutive in the time domain, the set of time-frequency resources 154 includes 7 time-frequency resources consecutive in the time domain, and the set of time-frequency resources 153 and the set of time-frequency resources 154 correspond to different time-domain positions and the same frequency-domain position.

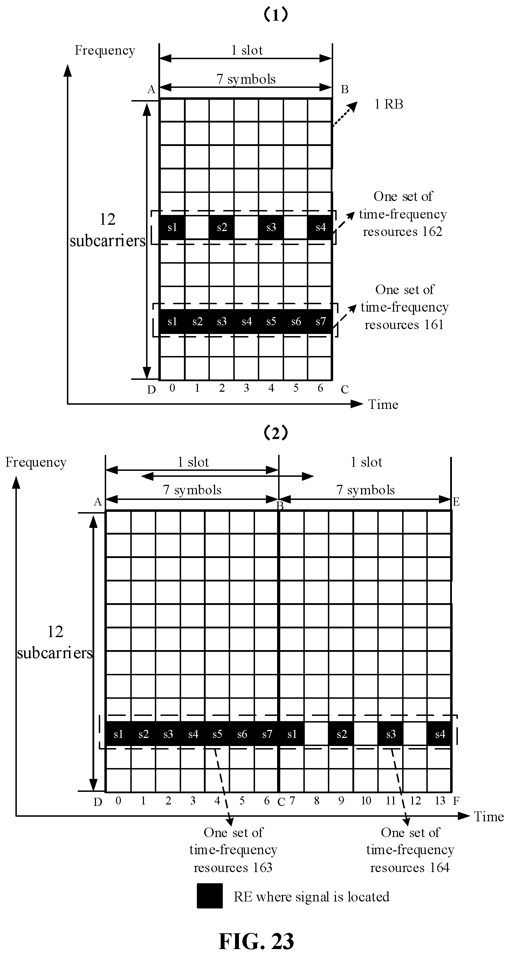

In some embodiments, FIG. 23 illustrates a schematic diagram of different sets of time-frequency resources provided by an exemplary embodiment of the disclosure. The horizontal axis in FIG. 23 represents time (time domain), and the vertical axis represents frequency (frequency domain). A physical resource corresponding to 1 subcarrier in the frequency domain and 1 Symbol in the time domain is called 1 Resource Element (RE). The physical resources corresponding to 12 consecutive subcarriers in the frequency domain and 1 slot in the time domain are called 1 Resource Block (RB), and 1 slot includes 7 symbols. Taking different sets of time-frequency resources including two sets of time-frequency resources as an example, part (1) in FIG. 23 shows a set of time-frequency resources 161 and a set of time-frequency resources 162. The set of time-frequency resources 161 includes 7 time-frequency resources consecutive in the time domain, the set of time-frequency resources 162 includes 4 time-frequency resources equally spaced in the time domain with the time interval being 1. The set of time-frequency resources 161 and the set of time-frequency resources 162 correspond to same time-domain positions and different frequency-domain positions. Part (2) of FIG. 23 shows a set of time-frequency resources 163 and a set of time-frequency resources 164. The set of time-frequency resources 163 includes 7 time-frequency resources consecutive in the time domain. The set of time-frequency resources 164 includes 4 time-frequency resources equally spaced in the time domain with the time interval being 1. The set of time-frequency resources 163 and the set of time-frequency resources 164 correspond to different time-domain positions and the same frequency-domain position.

### 5. Initial factor

In some embodiments, different sets of signals are generated based on a same signal sequence, and different sets of signals sent in different sets of time-frequency resources are signals corresponding to the same signal sequence. Or, different sets of signals are generated based on different signal sequences, and different sets of signals sent in different sets of time-frequency resources are signals corresponding to different signal sequences.

In some embodiments, the initial factor is used for determining the signal sequence. Herein, one initial factor corresponds to one signal sequence.

In some embodiments, the initial factor for determining the signal sequence is determined based on at least one of: a time-domain position of a specified time-frequency resource in the set of time-frequency resources, a frequency-domain position of the specified time-frequency resource in the set of time-frequency resources, or a node identifier. Herein, the node identifier is used for identifying a signal sending end device or for identifying the signal receiving end device, and the signal receiving end device is used for receiving the at least two signals.

In some embodiment, the specified time-frequency resource includes at least one of: a time-frequency resource having an earliest time-domain position among the set of time-frequency resources; a time-frequency resource having a central time-domain position among the set of time-frequency resources; a time-frequency resource having a latest time-domain position among the set of time-frequency resources; a time-frequency resource having a lowest frequency-domain position among the set of time-frequency resources; a time-frequency resource having a central frequency-domain position among the set of time-frequency resources; or a time-frequency resource having a highest frequency-domain position among the set of time-frequency resources.

In some embodiments, the specified time-frequency resource is the time-frequency resource having the earliest time-domain position among the set of time-frequency resources, and the time-frequency resource having the earliest time-domain position may also be a time-frequency resource occupied by a first one of signals corresponding to the signal sequence. For example, as shown in part (1) of FIG. 6, the time-frequency resource having the earliest position in the time domain among the set of time-frequency resources 141 is the time-frequency resource occupied by signal 1 (s1). The specified time-frequency resource is the time-frequency resource having the latest time-domain position among the set of time-frequency resources, and the time-frequency resource having the latest time-domain position among the set of time-frequency resources may also be a time-frequency resource occupied by a last one of the signals corresponding to the signal sequence. For example, as shown part (1) of FIG. 6, the time-frequency resource having the latest position in the time domain among the set of time-frequency resources 141 is the time-frequency resource occupied by the signal 7 (s7). The specified time-frequency resource is the time-frequency resource having the central time-domain position among the set of time-frequency resources; may also be any one time-frequency resource other than the time-frequency resource having the earliest time-domain position and the time-frequency resource having the latest time-domain position among the set of time-frequency resources; or may also be any one time-frequency resource other than time-frequency resources occupied by the first and last ones of the signals. For example, as shown in part (1) of FIG. 6, the time-frequency resource having the central time-domain position among the set of time-frequency resources 141 is a time-frequency resource occupied by the signal 2 (s2), the signal 3 (s3), the signal 4 (s4), the signal 5 (s5), or the signal 6 (s6).

In some embodiments, the specified time-frequency resource is the time-frequency resource having the lowest frequency-domain position among the set of time-frequency resources. For example, as shown in part (2) of FIG. 18, the time-frequency resource having the lowest frequency-domain position among the set of time-frequency resources 155 is a time-frequency resource occupied by the signal 8 (s8), the signal 9 (s9), the signal 10 (s10), the signal 11 (s11), the signal 12 (s12), the signal 13 (s13), or the signal 14 (s14). The specified time-frequency resource is the time-frequency resource having the highest frequency-domain position among the set of time-frequency resources. For example, as shown in part (2) of FIG. 18, the time-frequency resource having the highest frequency-domain position among the set of time-frequency resources 155 is a time-frequency resource occupied by signal 1 (s1), signal 2 (s2), signal 3 (s3), signal 4 (s4), signal 5 (s5), signal 6 (s6), or signal 7 (s7). The specified time-frequency resource is the time-frequency resource having the central frequency-domain position among the set of time-frequency resources, or may be any one time-frequency resource other than the time-frequency resources having the lowest and highest time-domain positions among the set of time-frequency resources.

In some embodiments, the time-domain position of the specified time-frequency resource is represented by at least one of following indices: an index of a slot where the specified time-frequency resource is located; an index of a frame where the specified time-frequency resource is located; an index of a sub-frame where the specified time-frequency resource is located; an index of a start symbol of the slot; or an index of a symbol where the specified time-frequency resource is located in the slot.

In some embodiments, the index of the start symbol of the slot of the specified time-frequency resource may be 0.

In some embodiments, the frequency-domain position of the specified time-frequency resource is represented by at least one of following indices: an index of a subcarrier where the specified time-frequency resource is located; an index of a resource block where the specified time-frequency resource is located; an index of a bandwidth part where the specified time-frequency resource is located; or an index of a carrier where the specified time-frequency resource is located.

In some embodiments, the index may be replaced with at least one of the following: sequence number, identifier, or character.

In some embodiments, an initial factor for determining a signal sequence is determined based on a time-domain position of a specified time-frequency resource in a set of time-frequency resources. The embodiment is applicable to a case where one set of time-frequency resources exists in a same transmission opportunity or time window, and at least two signals corresponding to a same signal sequence are sent on the set of time-frequency resources.

In some embodiments, the initial factor for determining the signal sequence is determined based on: a time-domain position of a specified time-frequency resource in the set of time-frequency resources and a node identifier. Herein, the node identifier is used for identifying a signal sending end device or for identifying the signal receiving end device, and the signal receiving end device is used for receiving the at least two signals. The embodiment is applicable to a case where a set of time-frequency resources exists in a same transmission opportunity or time window, at least two signals corresponding to a same signal sequence are transmitted on the set of time-frequency resources and the specific type of the node needs to be determined.

In some embodiments, the initial factor for generating the signal sequence is determined according to a node identifier *TX_id* of the signal sending end device, and a time-domain position (*n_slot, l*) of a time-frequency resource occupied by first one of signals corresponding to the signal sequence. The calculation expression is as follows. ${c}_{init} = \left(A\left({N}_{symb}^{slot}n_slot+l+1\right)\left(2TX_id+1\right)+TX_id\right) mod B$

Herein, *A* and *B* are conventional constants (integers greater than 0), ${N}_{symb}^{slot}$ is a number of symbols in one slot, *n_slot* is an index of a slot, where a first one of signals is located, in a radio frame, *l* is an index of a symbol where the first one of the signals is located, and *TX_id* is a node identifier of the signal sending end device.It is to be noted that the above calculation expression is merely an example. When determining the initial factor, as long as the time-domain position of the specified time-frequency resource and the node identifier of the signal sending end device are used as inputs of calculation expressions and the functions realized by the calculation expressions are the same as or similar with those of the calculation expression above, all of these calculation expressions are within the protection scope of the present embodiment.

In some embodiments, the initial factor for generating the signal sequence is determined according to a node identifier *RX_id* of the signal receiving end device, and a time-domain position (*n_slot, l*) of a time-frequency resource occupied by first one of signals corresponding to the signal sequence. The calculation expression is as follows. ${c}_{init} = \left(A\left({N}_{symb}^{slot}n_slot+l+1\right)\left(2RX_id+1\right)+RX_id\right) mod B$

Herein, *A* and *B* are conventional constants (integers greater than 0), ${N}_{symb}^{slot}$ is a number of symbols in one slot, *n_slot* is an index of a slot, where a first one of signals is located, in a radio frame, *l* is an index of a symbol where the first one of the signals is located, and *RX_id* is a node identifier of the signal receiving end device.It is to be noted that the above calculation expression is merely an example. When determining the initial factor, as long as the time-domain position of the specified time-frequency resource and the node identifier of the signal receiving end device are used as inputs of calculation expressions and the functions realized by the calculation expressions are the same as or similar with those of the calculation expression above, all of these calculation expressions are within the protection scope of the present embodiment.

In some embodiments, in the above two calculation methods, depending on configuration, *l* is determined using a symbol position where an actual signal is located, or *l* = 0 is directly used.*n_slot* may be an index of a slot where an actual symbol is located, or an index of a first one of slots within the time window, or an index of a first one of slots within the transmission opportunity, or an index of a first one of slots within the period.

In some embodiments, an initial factor for determining the signal sequence is determined based on: a time-domain position of a specified time-frequency resource in the set of time-frequency resources, and a frequency-domain position of the specified time-frequency resource in the set of time-frequency resources.

The embodiment is applicable to a case where different sets of time-frequency resources exist in a same transmission opportunity or time window, and at least two signals corresponding to different signal sequences are sent on the different sets of time-frequency resources. For example, as shown in part (1) of FIG. 22, a set of time-frequency resources 151 and a set of time-frequency resources 152 exist in the same transmission opportunity or time window, at least two signals are transmitted on different sets of time-frequency resources, and the at least two signals are generated based on different signal sequences. Thus, in part (1) of FIG. 22, since the set of time-frequency resources 151 and the set of time-frequency resources 152 have same time-domain positions, determining the initial factors corresponding to the at least two signals based only on time-domain position(s) of specified time-frequency resource(s) in one set of time-frequency resources will make the calculated two initial factors exactly the same. When at least two signals are generated based on different signal sequences, the two signal sequences cannot be distinguished. Therefore, the initial factors corresponding to at least two signals need to be determined, in the embodiment, based on the time-domain position(s) of the specified time-frequency resource(s) in the set of time-frequency resources and the frequency-domain position(s) of the specified time-frequency resource(s) in the set of time-frequency resources. So that at least two signals corresponding to different signal sequences are transmitted on different sets of time-frequency resources.

The embodiment is also applicable to a case where different sets of time-frequency resources exist in a same transmission opportunity or time window, and at least two signals corresponding to a same signal sequence are sent on the different sets of time-frequency resources. For example, as shown in part (1) of FIG. 22, a set of time-frequency resources 151 and a set of time-frequency resources 152 exist in the same transmission opportunity or time window, at least two signals are sent on different sets of time-frequency resources, and the at least two signals are generated based on a same signal sequence. Thus, in part (1) of FIG. 22, since the set of time-frequency resources 151 and the set of time-frequency resources 152 have same time-domain positions and different frequency-domain positions, if frequency-domain position(s) of the specified time-frequency resource(s) are not used, two types of initial factors will be calculated, and these two initial factors correspond to two distinct signal sequences. As a result, in the embodiment, it is necessary to determine the initial factor corresponding to at least two signals based on the time-domain position(s) and frequency-domain position(s) of the specified time-frequency resource(s) within one set of time-frequency resources. So that at least two signals corresponding to a same signal sequence are sent on different sets of time-frequency resources.

The embodiment is also applicable to a case where a set of time-frequency resources corresponds to at least one frequency-domain position within the same transmission opportunity or time window. Herein, when one set of time-frequency resources only corresponds to one frequency-domain position, by introducing the frequency-domain position of the specified time-frequency resource in the set of time-frequency resources, signal sequences sent on different sets of time-frequency resources can be made orthogonal, and it is possible to guarantee the autocorrelation properties of the signal sequences sent on different sets of time-frequency resources. For example, as shown in part (2) of FIG. 22, within the same transmission opportunity or time window, a set of time-frequency resources 155 corresponds to two frequency-domain positions. At least two signals are sent on the set of time-frequency resources 155, these signals are generated based on the same signal sequence, but the set of time-frequency resources 155 corresponds to two frequency-domain positions. Thus, if frequency-domain position(s) of the specified time-frequency resource(s) are not used, two types of initial factors may be determined, and these two initial factors correspond to two signal sequences. As a result, in the embodiment, it is necessary to determine the initial factor corresponding to at least two signals based on the time-domain position(s) and frequency-domain position(s) of the specified time-frequency resource(s) within one set of time-frequency resources. So that the signal sequence transmitted over a set of time-frequency resources is unique.

In some embodiments, an initial factor for determining the signal sequence is determined based on: a time-domain position of a specified time-frequency resource in the set of time-frequency resources, a frequency-domain position of the specified time-frequency resource in the set of time-frequency resources, and/or a node identifier.

In some embodiments, the initial factor for generating the signal sequence is determined according to a node identifier *TX_id* of the signal sending end device, and a time-domain position (*n_slot, l*) and a frequency-domain position of a time-frequency resource occupied by first one of signals corresponding to the signal sequence. The calculation expression is as follows. ${c}_{init} = \left(A\left({N}_{symb}^{slot}{n}_{slot}+l+k+1\right)\left(2TX_id+1\right)+TX_id\right) mod B$

Herein, *A* and *B* are conventional constants (integers greater than 0), ${N}_{symb}^{slot}$ is a number of symbols in one slot, *n_slot* is an index of a slot, where a first one of signals is located, in a radio frame, *l* is an index of a symbol where the first one of the signals is located, *k* is an index of a subcarrier where the first one of the signals is located, and *TX_id* is a node identifier of the signal sending end device.It is to be noted that the above calculation expression is merely an example. When determining the initial factor, as long as the time-domain position and the frequency-domain position of the specified time-frequency resource and the node identifier of the signal sending end device are used as inputs of calculation expressions and the functions realized by the calculation expressions are the same as or similar with those of the calculation expression above, all of these calculation expressions are within the protection scope of the present embodiment.

In some embodiments, the initial factor for generating the signal sequence is determined according to a node identifier *RX_id* of the signal receiving end device, and a time-domain position (*n_slot*, *l*) and a frequency-domain position of a time-frequency resource occupied by first one of signals corresponding to the signal sequence. The calculation expression is as follows. ${c}_{init} = \left(A\left({N}_{symb}^{slot}{n}_{slot}+l+k+1\right)\left(2RX_id+1\right)+RX_id\right) mod B$

Herein, *A* and *B* are conventional constants (integers greater than 0), ${N}_{symb}^{slot}$ is a number of symbols in one slot, *n_slot* is an index of a slot, where a first one of signals is located, in a radio frame, *l* is an index of a symbol where the first one of the signals is located, *k* is an index of a subcarrier where the first one of the signals is located, and *RX_id* is a node identifier of the signal receiving end device.It is to be noted that the above calculation expression is merely an example. When determining the initial factor, as long as the time-domain position and the frequency-domain position of the specified time-frequency resource and the node identifier of the signal receiving end device are used as inputs of calculation expressions and the functions realized by the calculation expressions are the same as or similar with those of the calculation expression above, all of these calculation expressions are within the protection scope of the present embodiment.

In some embodiments, in the above two calculation methods, depending on configuration, *l* is determined using a symbol position where an actual signal is located, or *l* = 0 is directly used. *n_slot* may be an index of a slot where an actual symbol is located, or an index of a first one of slots within the time window, or an index of a first one of slots within the transmission opportunity, or an index of a first one of slots within the period. *k* is an index of a subcarrier where a first one of the signals is located, or is an index of a resource block where the first one of the signals is located, or is an index of a bandwidth portion where the first one of the signals is located, or is an index of a carrier where the first one of the signals is located.

The embodiment is applicable to a case where different sets of time-frequency resources exist in the same transmission opportunity or time window, at least two signals sent by different sets of time-frequency resources are generated based on the same signal sequence or are generated based on different signal sequences, and a specific type of node needs to be determined, wherein whether the type of node is a signal sending end device or a signal receiving end device can be determined by the node identifier.

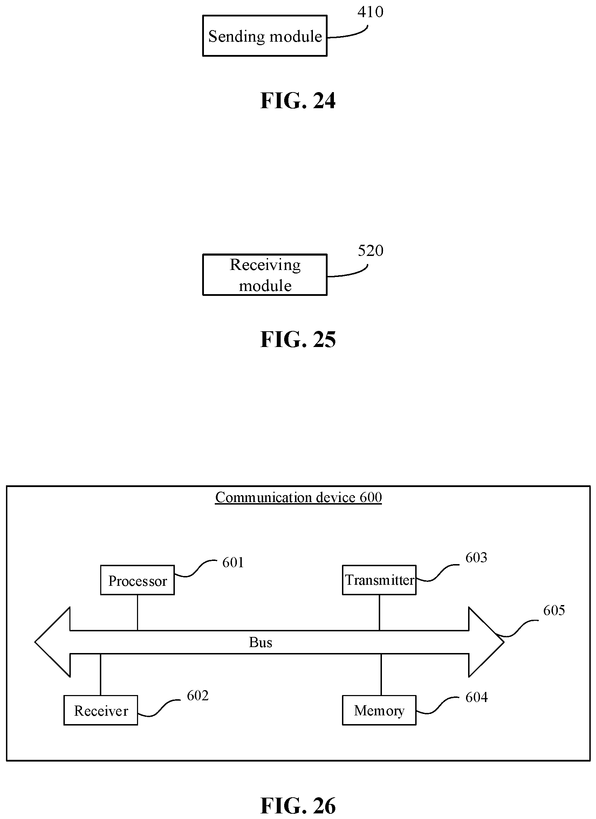

FIG. 24 illustrates a block diagram of a signal sending apparatus according to an exemplary embodiment of the disclosure, and the signal sending apparatus may be implemented as a signal sending end device or may be implemented as a part of the signal sending end device. The apparatus includes all or a part of: a sending module 410, a receiving module 420, and a processing module 430.

**The sending module 410** is configured to send at least two signals, the at least two signals occupying at least two time-frequency resources in a set of time-frequency resources, and the at least two time-frequency resources corresponding to different time-domain positions. The at least two signals are generated based on a same signal sequence.

In summary, the sending module 410 in the embodiment of the disclosure is configured to send at least two signals, the at least two signals occupying at least two time-frequency resources in a set of time-frequency resources, and the at least two time-frequency resources corresponding to different time-domain positions. The at least two signals are generated based on a same signal sequence. Since signals corresponding to the same signal sequence have autocorrelation properties, the autocorrelation properties of at least two signals transmitted on different time-frequency resources can be guaranteed, so that the sensing performance can be improved, which is beneficial to sensing measurement and sensing target detection.

In the sensing process, the signals used for measurement or detection are mostly reflected signals. Due to the influence of signal transmission environment, the reflected signals of signals sent in different time windows or different transmission opportunities may be superimposed in time. At this time, the autocorrelation properties of the signal sequence can be used to distinguish received signal sequence(s), so that the communication system is suitable for complex transmission environment.

In some embodiments, **the sending module 410** is further configured to send different sets of signals in different sets of time-frequency resources, each set of signals including at least two signals. The different sets of time-frequency resources correspond to same time-domain positions and different frequency-domain positions, or the different sets of time-frequency resources correspond to different time-domain positions and same frequency-domain positions, or the different sets of time-frequency resources correspond to different time-domain positions and different frequency-domain positions; and the different sets of signals are generated based on a same signal sequence, or the different sets of signals are generated based on different signal sequences.

In summary, the sending module 410 in the embodiment of the disclosure is configured to send different sets of signals in different sets of time-frequency resources, each set of signals including at least two signals. The different sets of signals are generated based on a same signal sequence, or the different sets of signals are generated based on different signal sequences. Herein, when the different sets of signals are generated based on a same signal sequence, the autocorrelation properties of the different sets of signals can be guaranteed, the sensing performance is improved, which is beneficial to sensing measurement and sensing target detection. When the different sets of signals are generated based on different signal sequences, signals corresponding to different signal sequences can be sent, and signal sending efficiency is improved.

In some embodiments, the apparatus further optionally includes a **receiving module 420** configured to receive at least one of following configuration information: first configuration information, second configuration information, or third configuration information. Herein, the first configuration information is used for configuration of a transmission opportunity and/or time window, the second configuration information is used for configuration of time-domain resources of a set of time-frequency resources, and the third configuration information is used for configuration of frequency-domain resources of the set of time-frequency resources.

In summary, the receiving module 420 in the embodiment of the disclosure is configured to, based on at least one of the first configuration information, the second configuration information or the third configuration information, enable at least two signals to be sent at different time-domain positions corresponding to a set of time-frequency resources. Since the at least two signals are generated based on the same signal sequence, the autocorrelation properties of the at least two signals can be guaranteed, and the sensing performance is improved, which is beneficial to sensing measurement and sensing target detection.

In some embodiments, there may be one or more sending modules 410 described above for simultaneously or separately performing the above sending steps, and there may be one or more receiving modules 420 described above for simultaneously or separately performing the above receiving steps. The device also optionally includes **a processing module 430**. There may be one or more processing modules 430 for performing corresponding processing in cooperation with the sending module 410 or the receiving module 420.

It should be noted that the signal sending apparatus provided in the embodiment is only illustrated by the division of the functional modules, and in practical application, the functions can be allocated to be implemented by different functional modules according to needs, that is, the internal structure of the apparatus can be divided into different functional modules to implement all or part of the functions described above. Regarding the signal sending apparatus in the present embodiment, the specific manner in which each module performs an operation has been described in detail in the embodiment of the signal receiving method, and for details, reference can be made to the relevant description of the above sections: "1. Signal; 2. Signal sequence; 3. One set of time-frequency resources; 4. Multiple sets of time-frequency resources; 5. Initial factor", which will not be described in detail here.

FIG. 25 illustrates a block diagram of a signal receiving apparatus according to an exemplary embodiment of the disclosure, and the signal sending apparatus may be implemented as a signal receiving end device or may be implemented as a part of the signal receiving end device. The apparatus includes all or a part of: a receiving module 510, a sending module 520, and a processing module 530.

**The receiving module 510** is configured to receive at least two signals, the at least two signals occupying at least two time-frequency resources in a set of time-frequency resources, and the at least two time-frequency resources corresponding to different time-domain positions. The at least two signals are generated based on a same signal sequence.

In summary, the receiving module 510 in the embodiment of the disclosure is configured to receive at least two signals, the at least two signals occupying at least two time-frequency resources in a set of time-frequency resources, and the at least two time-frequency resources corresponding to different time-domain positions. The at least two signals are generated based on a same signal sequence. Since signals corresponding to the same signal sequence have autocorrelation properties, the autocorrelation properties of at least two signals transmitted on different time-frequency resources can be guaranteed, so that the sensing performance can be improved, which is beneficial to sensing measurement and sensing target detection.

In the sensing process, the signals used for measurement or detection are mostly reflected signals. Due to the influence of signal transmission environment, the reflected signals of signals received in different time windows or different transmission opportunities may be superimposed in time. At this time, the autocorrelation properties of the signal sequence can be used to distinguish received signal sequence(s), so that the communication system is suitable for complex transmission environment.

In some embodiments, **the receiving module 510** is further configured to receive different sets of signals in different sets of time-frequency resources, each set of signals including at least two signals. The different sets of time-frequency resources correspond to same time-domain positions and different frequency-domain positions, or the different sets of time-frequency resources correspond to different time-domain positions and same frequency-domain positions, or the different sets of time-frequency resources correspond to different time-domain positions and different frequency-domain positions; and the different sets of signals are generated based on a same signal sequence, or the different sets of signals are generated based on different signal sequences.

In summary, the receiving module 510 in the embodiment of the disclosure is configured to receive different sets of signals in different sets of time-frequency resources, each set of signals including at least two signals. The different sets of signals are generated based on a same signal sequence, or the different sets of signals are generated based on different signal sequences. Herein, when the different sets of signals are generated based on a same signal sequence, the autocorrelation properties of the different sets of signals can be guaranteed, the sensing performance is improved, which is beneficial to sensing measurement and sensing target detection. When the different sets of signals are generated based on different signal sequences, signals corresponding to different signal sequences can be received, and signal receiving efficiency is improved.

In some embodiments, the **receiving module 510** is further configured to receive at least one of following configuration information: first configuration information, second configuration information, or third configuration information. Or, the apparatus further optionally includes a **sending module 520** configured to send at least one of following configuration information: first configuration information, second configuration information, or third configuration information. Herein, the first configuration information is used for configuration of a transmission opportunity and/or time window, the second configuration information is used for configuration of time-domain resources of a set of time-frequency resources, and the third configuration information is used for configuration of frequency-domain resources of the set of time-frequency resources.

In summary, the receiving module 510 or the sending module 520 in the embodiment of the disclosure is configured to, based on at least one of the first configuration information, the second configuration information or the third configuration information, enable at least two signals to be received at different time-domain positions corresponding to a set of time-frequency resources. Since the at least two signals are generated based on the same signal sequence, the autocorrelation properties of the at least two signals can be guaranteed, and the sensing performance is improved, which is beneficial to sensing measurement and sensing target detection.

In some embodiments, there may be one or more receiving modules 510 described above for simultaneously or separately performing the above receiving steps, and there may be one or more sending modules 520 described above for simultaneously or separately performing the above receiving steps, The device also optionally includes **a processing module 530**. There may be one or more processing modules 530 for performing corresponding processing in cooperation with the receiving module 510 or the sending module 520.

It should be noted that the signal receiving apparatus provided in the embodiment is only illustrated by the division of the functional modules, and in practical application, the functions can be allocated to be implemented by different functional modules according to needs, that is, the internal structure of the apparatus can be divided into different functional modules to implement all or part of the functions described above. Regarding the signal receiving apparatus in the present embodiment, the specific manner in which each module performs an operation has been described in detail in the embodiment of the signal receiving method, and for details, reference can be made to the relevant description of the above sections: "1. Signal; 2. Signal sequence; 3. One set of time-frequency resources; 4. Multiple sets of time-frequency resources; 5. Initial factor", which will not be described in detail here.

FIG. 26 illustrates a schematic structural block diagram of a communication device provided by some exemplary embodiments of the disclosure, and the communication device 600 includes a processor 601, a receiver 602, a transmitter 603, a memory 604, and a bus 605.

In some embodiments, the communication device 600 may be implemented as a terminal device. The terminal device may be implemented as a signal sending end device, or may be implemented as a part of the signal sending end device. Or, the terminal device may be implemented as a signal receiving end device, or may be implemented as a part of the signal receiving end device.

In some embodiments, the communication device 600 may be implemented as a network device. The network device may be implemented as a signal sending end device, or may be implemented as a part of a signal sending end device. Or, the network device may be implemented as a signal receiving end device, or may be implemented as a part of the signal receiving end device.

The processor 601 includes one or more processing cores, and executes various functional applications and information processing by running software programs and modules. In some embodiments, the processor 601 may be configured to implement corresponding functions and perform corresponding steps in cooperation with the sending module 410, the receiving module 420, the receiving module 510, and the sending module 520 described above. The receiver 602 and the transmitter 603 may be implemented as a communication component, which may be a communication chip.

In some embodiments, the receiver 602 may be used to implement the functions and steps of the receiving module 420 and/or the receiving module 510 as described above. The transmitter 603 may be used to implement the functions and steps of the sending module 410 and/or the sending module 520 as described above. The memory 604 is connected to the processor 601 via the bus 605. The memory 604 may be configured to store at least one instruction to be executed by the processor 601 to implement the functions and steps of the processing module 430 or the processing module 530 described above. Further, the memory 604 may be implemented by any type of volatile or non-volatile storage device or a combination thereof, which includes, but not limited to, magnetic or optical disk, Electrically Erasable Programmable Read-Only Memory (EEPROM), Erasable Programmable Read-Only Memory (EPROM), Static Random-Access Memory (SRAM), Read-Only Memory (ROM), magnetic memory, flash memory, Programmable Read-Only Memory (PROM).

In some embodiments, the receiver 602 receives the signal/data independently, or the processor 601 controls the receiver 602 to receive the signal/data, or the processor 601 requests the receiver 602 to receive the signal/data, or the processor 601 cooperates with the receiver 602 to receive the signal/data. In some embodiments, the transmitter 603 transmits the signal/data independently, or the processor 601 controls the transmitter 603 to transmit the signal/data, or the processor 601 requests the transmitter 603 to transmit the signal/data, or the processor 601 cooperates with the transmitter 603 to transmit the signal/data.

In some embodiments, there is further provided a computer-readable storage medium having stored thereon at least section of programs loaded and executed by a processor to perform the signal sending method and/or signal receiving method according to various method embodiments above.

In some embodiments, there is further provided a chip including a programmable logic circuit or a program, the chip, when running one a communication device, being configured to perform the signal sending method and/or signal receiving method according to various method embodiments above.

In some embodiments, there is further provided a computer program product running on a processor of a computer device to cause the computer device to perform the signal sending method and/or signal receiving method according to various method embodiments above.

In some embodiments, there is further provided a computer program, including computer instructions executed by a processor of a computer device to cause the computer device to perform the signal sending method and/or signal receiving method according to various method embodiments above.

Those skilled in the art should recognize that in one or more of the examples described above, the functions described in the embodiments of the disclosure may be implemented in hardware, software, firmware, or any combination thereof. When implemented using software, these functions may be stored in a computer readable medium, or transmitted as one or more instructions or codes on a computer readable medium. The computer-readable medium includes a computer storage medium and a communication medium, wherein communication medium includes any medium that facilitates transfer of a computer program from one place to another. The storage medium is any available medium accessible by a general-purpose or special-purpose computer.

The above describes only optional embodiments of the disclosure, and is not intended to limit the disclosure. Any modification, equivalent substitution, improvement and the like made within the spirit and principles of the disclosure should be included within the scope of protection of the disclosure.

## Claims

1. A signal sending method, applied to a signal sending end device, the method comprising:
sending at least two signals, the at least two signals occupying at least two time-frequency resources in a set of time-frequency resources, and the at least two time-frequency resources corresponding to different time-domain positions,
wherein the at least two signals are generated based on a same signal sequence.

2. The method of claim 1, further comprising:
sending different sets of signals in different sets of time-frequency resources, each set of signals comprising at least two signals,
wherein the different sets of time-frequency resources correspond to same time-domain positions and different frequency-domain positions, or the different sets of time-frequency resources correspond to different time-domain positions and same frequency-domain positions, or the different sets of time-frequency resources correspond to different time-domain positions and different frequency-domain positions; and the different sets of signals are generated based on a same signal sequence, or the different sets of signals are generated based on different signal sequences.

3. The method of claim 1 or 2, wherein an initial factor for determining the signal sequence is determined based on at least one of: a time-domain position of a specified time-frequency resource in the set of time-frequency resources, a frequency-domain position of the specified time-frequency resource in the set of time-frequency resources, or a node identifier,
wherein the node identifier is used for identifying the signal sending end device or for identifying a signal receiving end device, and the signal receiving end device is used for receiving the at least two signals.

4. The method of claim 3, wherein the specified time-frequency resource comprises at least one of:
a time-frequency resource having an earliest time-domain position among the set of time-frequency resources; a time-frequency resource having a central time-domain position among the set of time-frequency resources; a time-frequency resource having a latest time-domain position among the set of time-frequency resources; a time-frequency resource having a lowest frequency-domain position among the set of time-frequency resources; a time-frequency resource having a central frequency-domain position among the set of time-frequency resources; or a time-frequency resource having a highest frequency-domain position among the set of time-frequency resources.

5. The method of claim 3, wherein the time-domain position of the specified time-frequency resource is represented by at least one of following indices:
an index of a slot where the specified time-frequency resource is located; an index of a frame where the specified time-frequency resource is located; an index of a sub-frame where the specified time-frequency resource is located; an index of a start symbol of the slot; or an index of a symbol where the specified time-frequency resource is located in the slot.

6. The method of claim 3, wherein the frequency-domain position of the specified time-frequency resource is represented by at least one of following indices:
an index of a subcarrier where the specified time-frequency resource is located; an index of a resource block where the specified time-frequency resource is located; an index of a bandwidth part where the specified time-frequency resource is located; or an index of a carrier where the specified time-frequency resource is located.

7. The method of any one of claims 1 to 6, wherein the set of time-frequency resources are time-frequency resources within a same transmission opportunity; or, the set of time-frequency resources are time-frequency resources in a same time window.

8. The method of claim 7, wherein the transmission opportunity or the time window is periodic; or, the transmission opportunity or the time window is signaling-triggered.

9. The method of claim 7 or 8, wherein the transmission opportunity or the time window is configured by first configuration information.

10. The method of claim 9, wherein the first configuration information is used for configuring at least one of:
a length of the transmission opportunity or the time window; a period of the transmission opportunity or the time window; a time window start offset; a start position of a signal transmission within the transmission opportunity or the time window; a time-domain mapping manner of the at least two signals; or a frequency-domain mapping manner of the at least two signals.

11. The method of claim 10, wherein a length of the transmission opportunity or the time window is related to at least one of:
a number of signals corresponding to the signal sequence; a transmission time length of the signal sequence; a time interval between a start time of a first one of signals corresponding to the signal sequence and a start time of a last one of the signals; a time interval between the start time of the first one of signals corresponding to the signal sequence and an end time of the last one of the signals; a length of a time-domain unit for mapping the signal sequence; a number of time-domain units for mapping the signal sequence; or a time interval between the time-domain units for mapping the signal sequence,
wherein each of the time-domain units is used for mapping at least one signal.

12. The method of claim 10, wherein the period of the transmission opportunity or the time window is related to at least one of:
a transmission period of the signal sequence; or a time interval between a start time of an i-th signal sequence and a start time of an (i + l)-th signal sequence, where i is greater than or equal to 0.

13. The method of any one of claims 1 to 12, wherein time-domain positions corresponding to the set of time-frequency resources are configured by second configuration information.

14. The method of claim 13, wherein the second configuration information is used for configuring at least one of:
a number of time-domain units corresponding to the set of time-frequency resources; a length of the time-domain units corresponding to the set of time-frequency resources; a time interval between the time-domain units corresponding to the set of time-frequency resources; a time-domain mapping manner of the at least two signals,
wherein each of the time-domain units is used for mapping at least one signal.

15. The method of claim 14, wherein the number of time-domain units corresponding to the set of time-frequency resources is related to at least one of:
a length of the signal sequence, or a number of signals corresponding to the signal sequence.

16. The method of any one of claims 11 to 15, wherein the time-domain unit is at least one of a first time-domain unit or a second time-domain unit, each of the second time-domain units comprising at least two first time-domain units, and each of the first time-domain units being used for mapping one signal.

17. The method of any one of claims 10 to 16, wherein the mapping manner comprises at least one of:
mapping on at least two consecutive first time-domain units; mapping within at least two consecutive second time-domain units; mapping on at least two spaced first time-domain units; mapping within at least two spaced second time-domain units; or mapping within one second time-domain unit.

18. The method of claim 17, wherein mapping within at least two spaced second time-domain units comprises one of:
mapping on at least two consecutive first time-domain units within any one of at least two spaced second time-domain units; or mapping on at least two spaced first time-domain units within any one of at least two spaced second time-domain units.

19. The method of any one of claims 1 to 18, wherein the set of time-frequency resources are consecutive in the time domain or spaced in the time domain.

20. The method of claim 19, wherein the set of time-frequency resources are spaced in the time domain, and a time interval corresponding to the set of time-frequency resources is related to at least one of:
a time interval between adjacent signal transmissions for the at least two signals; or a time interval between a transmission start time of a j-th signal and a transmission start time of a (j+1)-th signal among the at least two signals, where j is greater than or equal to 0.

21. The method of any one of claims 1 to 20, wherein frequency-domain positions corresponding to the set of time-frequency resources are configured by third configuration information.

22. The method of claim 21, wherein the third configuration information is used for configuring at least one of:
a frequency-domain resource unit; a frequency-domain resource start position; a frequency-domain resource range; or a frequency-domain mapping manner of the at least two signals.

23. The method of claim 22, wherein the frequency-domain resource unit comprises at least one of:
subcarrier; resource block; or resource element.

24. The method of claim 22, wherein the frequency-domain resource start position is represented by at least one of:
an index of a start resource block; an index of a start subcarrier occupied by the signal sequence in the start resource block; or an index of a start resource element occupied by the signal sequence in the start resource block.

25. The method of claim 22, wherein the frequency-domain resource range is determined based on at least one of:
a number of subcarriers; a number of resource blocks; or a number of resource elements.

26. The method of clam 10 or 22, wherein the frequency-domain mapping manner comprises at least one of:
mapping on consecutive frequency-domain resource units; or mapping on spaced frequency-domain resource units.

27. A signal receiving method, applied to a signal receiving end device, the method comprising:
receiving at least two signals, the at least two signals occupying at least two time-frequency resources in a set of time-frequency resources, and the at least two time-frequency resources corresponding to different time-domain positions,
wherein the at least two signals are generated based on a same signal sequence.

28. The method of claim 27, further comprising:
receiving different sets of signals in different sets of time-frequency resources, each set of signals comprising at least two signals,
wherein the different sets of time-frequency resources correspond to same time-domain positions and different frequency-domain positions, or the different sets of time-frequency resources correspond to different time-domain positions and same frequency-domain positions, or the different sets of time-frequency resources correspond to different time-domain positions and different frequency-domain positions; and the different sets of signals are generated based on a same signal sequence, or the different sets of signals are generated based on different signal sequences.

29. The method of claim 27 or 28, wherein an initial factor for determining the signal sequence is determined based on at least one of: a time-domain position of a specified time-frequency resource in the set of time-frequency resources, a frequency-domain position of the specified time-frequency resource in the set of time-frequency resources, or a node identifier,
wherein the node identifier is used for identifying a signal sending end device or for identifying the signal receiving end device, and the signal sending end device is used for sending the at least two signals.

30. The method of claim 29, wherein the specified time-frequency resource comprises at least one of:
a time-frequency resource having an earliest time-domain position among the set of time-frequency resources; a time-frequency resource having a central time-domain position among the set of time-frequency resources; a time-frequency resource having a latest time-domain position among the set of time-frequency resources; a time-frequency resource having a lowest frequency-domain position among the set of time-frequency resources; a time-frequency resource having a central frequency-domain position among the set of time-frequency resources; or a time-frequency resource having a highest frequency-domain position among the set of time-frequency resources.

31. The method of claim 29, wherein the time-domain position of the specified time-frequency resource is represented by at least one of following indices:
an index of a slot where the specified time-frequency resource is located; an index of a frame where the specified time-frequency resource is located; an index of a sub-frame where the specified time-frequency resource is located; an index of a start symbol of the slot; or an index of a symbol where the specified time-frequency resource is located in the slot.

32. The method of claim 29, wherein the frequency-domain position of the specified time-frequency resource is represented by at least one of following indices:
an index of a subcarrier where the specified time-frequency resource is located; an index of a resource block where the specified time-frequency resource is located; an index of a bandwidth part where the specified time-frequency resource is located; or an index of a carrier where the specified time-frequency resource is located.

33. The method of any one of claims 27 to 32, wherein the set of time-frequency resources are time-frequency resources within a same transmission opportunity; or, the set of time-frequency resources are time-frequency resources in a same time window.

34. The method of claim 33, wherein the transmission opportunity or the time window is periodic; or, the transmission opportunity or the time window is signaling-triggered.

35. The method of claim 33 or 34, wherein the transmission opportunity or the time window is configured by first configuration information.

36. The method of claim 35, wherein the first configuration information is used for configuring at least one of:
a length of the transmission opportunity or the time window; a period of the transmission opportunity or the time window; a time window start offset; a start position of a signal transmission within the transmission opportunity or the time window; a time-domain mapping manner of the at least two signals; or a frequency-domain mapping manner of the at least two signals.

37. The method of claim 36, wherein a length of the transmission opportunity or the time window is related to at least one of:
a number of signals corresponding to the signal sequence; a transmission time length of the signal sequence; a time interval between a start time of a first one of signals corresponding to the signal sequence and a start time of a last one of the signals; a time interval between the start time of the first one of signals corresponding to the signal sequence and an end time of the last one of the signals; a length of a time-domain unit for mapping the signal sequence; a number of time-domain units for mapping the signal sequence; or a time interval between the time-domain units for mapping the signal sequence,
wherein each of the time-domain units is used for mapping at least one signal.

38. The method of claim 36, wherein the period of the transmission opportunity or the time window is related to at least one of:
a transmission period of the signal sequence; or a time interval between a start time of an i-th signal sequence and a start time of an (i + l)-th signal sequence, where i is greater than or equal to 0.

39. The method of any one of claims 27 to 38, wherein time-domain positions corresponding to the set of time-frequency resources are configured by second configuration information.

40. The method of claim 39, wherein the second configuration information is used for configuring at least one of:
a number of time-domain units corresponding to the set of time-frequency resources; a length of the time-domain units corresponding to the set of time-frequency resources; a time interval between the time-domain units corresponding to the set of time-frequency resources; a time-domain mapping manner of the at least two signals,
wherein each of the time-domain units is used for mapping at least one signal.

41. The method of claim 40, wherein the number of time-domain units corresponding to the set of time-frequency resources is related to at least one of:
a length of the signal sequence, or a number of signals corresponding to the signal sequence.

42. The method of any one of claims 37 to 41, wherein the time-domain unit is at least one of a first time-domain unit or a second time-domain unit, each of the second time-domain units comprising at least two first time-domain units, and each of the first time-domain units being used for mapping one signal.

43. The method of any one of claims 36 to 42, wherein the mapping manner comprises at least one of:
mapping on at least two consecutive first time-domain units; mapping within at least two consecutive second time-domain units; mapping on at least two spaced first time-domain units; mapping within at least two spaced second time-domain units; or mapping within one second time-domain unit.

44. The method of claim 43, wherein mapping within at least two spaced second time-domain units comprises one of:
mapping on at least two consecutive first time-domain units within any one of at least two spaced second time-domain units; or mapping on at least two spaced first time-domain units within any one of at least two spaced second time-domain units.

45. The method of any one of claims 27 to 44, wherein the set of time-frequency resources are consecutive in the time domain or spaced in the time domain.

46. The method of claim 45, wherein the set of time-frequency resources are spaced in the time domain, and a time interval corresponding to the set of time-frequency resources is related to at least one of:
a time interval between adjacent signal transmissions for the at least two signals; or a time interval between a transmission start time of a j-th signal and a transmission start time of a (j+1)-th signal among the at least two signals, where j is greater than or equal to 0.

47. The method of any one of claims 27 to 46, wherein frequency-domain positions corresponding to the set of time-frequency resources are configured by third configuration information.

48. The method of claim 47, wherein the third configuration information is used for configuring at least one of:
a frequency-domain resource unit; a frequency-domain resource start position; a frequency-domain resource range; or a frequency-domain mapping manner of the at least two signals.

49. The method of claim 48, wherein the frequency-domain resource unit comprises at least one of:
subcarrier; resource block; or resource element.

50. The method of claim 48, wherein the frequency-domain resource start position is represented by at least one of:
an index of a start resource block; an index of a start subcarrier occupied by the signal sequence in the start resource block; or an index of a start resource element occupied by the signal sequence in the start resource block.

51. The method of claim 48, wherein the frequency-domain resource range is determined based on at least one of:
a number of subcarriers; a number of resource blocks; or a number of resource elements.

52. The method of clam 36 or 48, wherein the frequency-domain mapping manner comprises at least one of:
mapping on consecutive frequency-domain resource units; or mapping on spaced frequency-domain resource units.

53. A signal sending apparatus, comprising:
a sending module, configured to send at least two signals, the at least two signals occupying at least two time-frequency resources in a set of time-frequency resources, and the at least two time-frequency resources corresponding to different time-domain positions,
wherein the at least two signals are generated based on a same signal sequence.

54. A signal receiving apparatus, comprising:
a receiving module, configured to receive at least two signals, the at least two signals occupying at least two time-frequency resources in a set of time-frequency resources, and the at least two time-frequency resources corresponding to different time-domain positions,
wherein the at least two signals are generated based on a same signal sequence.

55. A terminal device, comprising:
a processor; a transceiver coupled to the processor; and a memory for storing instructions executable by the processor,
wherein the terminal device is configured to perform the signal sending method of any one of claims 1 to 26, or perform the signal receiving method of any one of claims 27 to 52.

56. A network device, comprising:
a processor; a transceiver coupled to the processor; and a memory for storing instructions executable by the processor,
wherein the network device is configured to perform the signal sending method of any one of claims 1 to 26, or perform the signal receiving method of any one of claims 27 to 52.

57. A computer-readable storage medium having stored thereon executable instructions loaded and executed by a processor to perform the signal sending method of any one of claims 1 to 26, or the signal receiving method of any one of claims 27 to 52.

58. A chip, comprising a programmable logic circuit or a program, the chip being configured to perform the signal sending method of any one of claims 1 to 26, or the signal receiving method of any one of claims 27 to 52.

59. A computer program product, comprising computer instructions stored in a computer-readable storage medium from which a processor of a computer device reads the computer instructions, wherein the processor executes the computer instructions to cause the computer device to perform the signal sending method of any one of claims 1 to 26, or the signal receiving method of any one of claims 27 to 52.

60. A computer program, comprising computer instructions executed by a processor of a computer device to cause the computer device to perform the signal sending method of any one of claims 1 to 26, or the signal receiving method of any one of claims 27 to 52.
